# EUROPEAN PATENT APPLICATION

(11) **EP 4 663 553 A2**
(43) Date of publication of application: **17.12.2025**
(21) Application number: 25211526.6
(22) Date of filing: 27.10.2025
(51) Int. Cl.: B64F 1/36, B64F 1/305, B64D 9/00

(54) **FULLY AUTOMATED END-TO-END BAGGAGE HANDLING SYSTEM INCORPORATING AN AUTHENTICATED-PASSENGER BAGGAGE CLAIM AT AIRPORTS**

(71) Applicant: Altikriti, Mudhar Farouq Abdulsattar, 8020 Graz Styria (AT)
(72) Inventor: Altikriti, Mudhar Farouq Abdulsattar, 8020 Graz Styria (AT)

(57) **Abstract**

A fully automated end-to-end baggage-handling system (1000) integrates ground, transfer, aircraft-cargo-hold, and reclaim operations under centralized control (ConSys 8000). Ground-Air Rack Devices (GARD 2000) retain baggage within rack modules conveyed by Robo-Shuttles (3100) and Autonomous Mobile Robots (3200) across terminal and apron zones. Continuous GARD transfer between terminal and aircraft is achieved through Cargo Travelator-Operated Bridges (CTROB 4100), Subways (CTROS 4200), and Dolly Trains (GADOT 4310). Within the aircraft cargo hold (5000), GARD units are indexed by the Logistics Obround Orchestrated Platform (LOOP 5200) without manual intervention. At arrival terminals, GARD units are unloaded from the aircraft and conveyed in reverse sequence of the departure process through transfer infrastructures to the Baggage Claim for Authenticated-Passenger subsystem (BACAP 7000), where Biometric Baggage-Claim Gates (BIOBAG 7100) manage the authenticated-passenger baggage retrieval process. The system enables unmanned, continuous, and traceable baggage transfer between Departure, Apron, and Arrival operations.

## Description

### FIELD OF THE INVENTION

The invention relates to fully automated end-to-end baggage handling systems implemented at airports, in which all processes after baggage handover at departure until baggage reclaim at arrival are performed in an unmanned, fully automated manner.

### BACKGROUND OF THE INVENTION

Passenger baggage handling at airports typically involves a sequence of mechanical and manual operations coordinated across multiple subsystems. At check-in, baggage items are accepted at counters or automated kiosks, tagged, and transferred into a conveyor-based network. Conveyors route baggage through in-line screening and sorting equipment before directing it to make-up areas, where items are prepared for transport to the aircraft.

In current practice, baggage destined for the aircraft may be consolidated into unit load devices (ULDs), such as containers or pallets, or alternatively bulk-loaded directly into the aircraft cargo compartment. Both approaches require multiple intermediate transfer steps, including manual placement of baggage items into containers, transfer of containers onto dollies, and loading via belt loaders or container loaders into the aircraft cargo hold.

At the aircraft stand, baggage transfer is dependent on ground support equipment and personnel. ULD dollies, tractors, and belt loaders are positioned at the aircraft. Ground staff coordinate the offloading of arriving baggage and the loading of departing baggage, often under time-critical constraints linked to flight turnaround schedules. The process is inherently fragmented, involving equipment from different suppliers and ground handling teams operating in sequence. Human supervision and intervention remain essential at apron positions, preventing a truly unmanned process.

At arrival airports, baggage is removed from the aircraft through the reverse procedure. Items are transferred onto belt loaders or from ULDs to dollies, moved across the apron to the terminal, and reintroduced into the conveyor system. Baggage is then delivered to passengers via carousel systems in the reclaim hall. In most cases, passenger identification is not automatically verified at claim, and retrieval relies on passengers recognizing their baggage, supplemented only by occasional spot checks. Human operators, therefore, remain involved in both apron transfer and reclaim operations.

Although these systems are established and widely deployed, they present technical limitations that are relevant for understanding the need addressed by the present invention.
- First, the reliance on multiple transfers between conveyors, carts, loaders, and containers introduces additional handling stages, each of which can increase the probability of baggage mishandling, misrouting, or damage.
- Second, the dependence on manual loading and unloading steps contributes to variability in process time, since labor availability, environmental conditions, and ramp congestion influence turnaround efficiency.
- Third, conventional baggage claim systems offer limited authentication, since they lack integrated mechanisms for verifying that each bag is released only to its rightful passenger.
- Finally, the coexistence of different subsystems - conveyors, dollies, loaders, and manual handling - creates complex coordination and higher resource use.

These limitations highlight a technical problem: how to design a baggage handling architecture that provides a continuous, unmanned process between baggage handover at departure and baggage reclaim at arrival, eliminates intermediate transfers between heterogeneous equipment, integrates all subsystems into a single automated framework, and ensures that baggage release at claim is performed through authenticated, passenger-specific verification.

### SUMMARY OF THE INVENTION

The invention ensures an end-to-end, fully automatic baggage flow across the entire journey, from departure terminal check-in points to arrival terminal baggage reclaim zones, including the aircraft cargo hold compartments, with continuous, reliable, and unmanned operation of baggage handling throughout all processes. Herein, we introduce two baggage categories: International Air Transport Association (IATA)-standard baggage (1100), hereinafter standard baggage (1100), and non-IATA standard baggage items (1200), hereinafter non-standard baggage (1200), such as surfboards, wheelchairs, musical instruments, or other out-of-gauge objects. These two baggage categories are hereinafter jointly referred to as baggage (1100, 1200). At the end of the flight journey, an authenticated-passenger baggage claim is applied to provide an optimal, hassle-free experience for passengers and stakeholders of airport operations. In this way, the system (1000) realizes a functional architecture disclosed herein as distinct from conventional Baggage Handling Systems (BHS). The system (1000) therefore functions as an Unmanned Baggage Handling System (UBHS), defined by this disclosure, by virtue of its fully automatic, unmanned, and end-to-end process functionality. The solution is a fully integrated framework applicable to both brownfield and greenfield airports and adaptable to different infrastructure levels.

The system (1000) comprises the following coordinated subsystems and functional infrastructures:
Baggage containment devices such as Ground-Air Rack Devices (GARD (2000)), defined by the present disclosure, are modular rack units configured to receive, accommodate, and secure baggage (1100, 1200). Unlike conventional Unit Load Devices (ULDs) limited to aircraft use, GARD (2000) serves a dual role across both ground facilities and aircraft cargo compartments. On the ground, they operate as secure, traceable mobile storage units that replace large static conveyor-based storage zones; in aircraft operations, they function as standardized containers for baggage (1100, 1200) into and out of the aircraft cargo hold, hereafter cargo hold (5000). In all embodiments, GARD (2000) are conveyed exclusively by automated handling subsystems described herein, fully automated integration, monitored, controlled, and executed operation throughout their journeys, and distinguishing them from conventional ULDs, which are limited to aircraft use and not integrated into an end-to-end automated baggage handling system.

Automated loading and unloading shuttles such as Robo-Shuttle Unit (Shuttle (3100)), for Departure (Shuttle-D (3110)) and for Arrival (Shuttle-A (3120)), defined by the present disclosure, configured to allocate or retract baggage (1100, 1200) into or out of GARD (2000).

Automated staging buffers such as Mobile Storage Unit Buffer (MOSUB (6100)), for Departure (MOSUB (6110)) and for Arrival (MOSUB (6120)), defined by the present disclosure, configured to temporarily store GARD (2000) before loading or after unloading them, and before dispatching and receiving them to or from terminal-aircraft transfer infrastructures.

Motive transport vehicles (3000) such as Autonomous Mobile Robot / Automated Guided Vehicle (AMR/AGV (3200)), known per se but adapted and integrated herein, configured to convey GARD (2000) between MOSUB (6100) and the accesses of terminal-aircraft transfer infrastructures described herein.

Terminal-aircraft transfer infrastructures (4000) to dispatch and receive GARD (2000) to and from aircraft cargo hold doors, grouped into the following embodiments:
[0009e1] Cargo Travelator-Operated Bridges (CTROB (4100)), defined by the present disclosure, comprising telescopic or foldable conveyorized bridge weather-protected structures, passing over the apron roadway, configured to transfer GARD (2000) units between their accesses connected to the terminal building and sill (5100), hereinafter referred to as sill (5100). CTROB (4100) employs cargo-adapted travelator technology with powered decks to carry successive GARD units safely along inclines or declines, with interlocks ensuring positive restraint.
[0009e2] Cargo Travelator-Operated Subways (CTROS (4200)), defined by the present disclosure, comprising subsurface conveyorized tunnels configured to transfer GARD (2000) units between their accesses and sill (5100). CTROS (4200) enables weather-protected, continuous transfer beneath apron roadway, with powered decks and load-restraint systems.
[0009e3] GARD Exchange Points (GEP (4300)), defined by the present disclosure, are terminal-side staging areas where GARD (2000) units are dispatched to or received from aircraft. Transfers occur across GEP (4300), linked to MOSUB (6100), to handle terminal-aircraft GARD (2000) movements, primarily for aircraft stands located far from terminal buildings, while also serving as an alternative interface in cases where CTROB (4100) or CTROS (4200) are not in service.
   - GADOT (GARD Dolly Train) (4310), inspired by and functionally equivalent to the "ULD Dolly Train" defined in the IATA Airport Handling Manual (AHM), comprising a tow tractor and one or more GARD-adapted dollies configured to transport GARD (2000) units across the apron. Depending on operational requirements, GADOT (4310) may be operated autonomously or by human drivers, but always under ConSys (8000) supervision and control.
   - CPL (Container/Pallet Loader) (4320), already defined in the IATA Airport Handling Manual (AHM) and referenced herein as CPL (4320), configured to raise, align, and transfer GARD (2000) units to and from the aircraft sill (5100). When supervised by ConSys (8000), CPL (4320) can be integrated into the fully automated system (1000) for safe handover without manual intervention.

Sill-boundary transfer modules such as an Elevating Transfer and Alignment (ETRA (4230)) and a Smart Door Transfer Unit (SDTU (5300)), defined by the present disclosure, positioned at sill (5100) interfaces. ETRA (4230), equipped with CTROS (4200) subsystem, provides vertical lifting and preliminary alignment of GARD (2000) units arriving below sill level, equivalent in function to conventional CPL (4320) elevation, while also incorporating staging and isolation features. SDTU (5300) provides the powered sill-head hand-off with roller/ball arrays, load monitoring, and door interlocks, incorporating fine alignment and gating before transfer into LOOP (5200). Together, ETRA (4230) and SDTU (5300) form the complete sill-boundary interface.

Cargo-hold floor-integrated guiding framework such as Logistics Obround Orchestrated Platform (LOOP (5200)), defined by the present disclosure, is shaped in an obround (racetrack) geometry. The term "orchestrated" designates that the platform incorporates active sequencing and indexing control, whereby GARD (2000) units are advanced stepwise and aligned precisely along the obround path under the command of a central control system. LOOP (5200) comprises a Dense Pop-up Lock Grid (DPLG (5210)) and a Roller Drive Assembly (RODA (5220)), both defined by the present disclosure, configured to position and secure GARD (2000) inside the cargo hold (5000).

A clearance module, such as a Simultaneous Unidirectional Rearward Module (SURM (5230)), defined by the present disclosure, is configured to generate temporary lane clearance within the cargo hold (5000) by performing a synchronized rearward motion of both LOOP (5200) lanes simultaneously. The SURM (5230) cooperates with the Roller Drive Assembly (RODA (5220)) and Dense Pop-Up Lock Grid (DPLG (5210)) to execute a one-time, coordinated rearward displacement of all GARD (2000) units positioned along both LOOP (5200) lanes. This synchronized motion produces a clearance region at the closed end of the cargo hold (5000), adjacent to the cargo partition wall, thereby enabling the Extended Tapered Base Frame (ETBF (2700)) of the innermost GARD (2000) to rotate through approximately 90° left or right and realign between the parallel LOOP (5200) lanes without requiring the offloading of other GARD (2000) units from the cargo hold (5000).

Authenticated-passenger reclaim subsystems such as a Baggage Claim for Authenticated Passenger (BACAP (7000)), defined by the present disclosure, configured to provide authenticated and automation-enforced handover of baggage (1100, 1200) to passengers at arrival. Conventional reclaim systems provide no authentication-based delivery; the disclosed subsystem enables secure reclaim within the integrated process.

A supervisory control system such as Central Control System (ConSys (8000)), defined by the present disclosure, configured to monitor operations, coordinate sequencing, and integrate all subsystems and functional infrastructural areas across departure, apron transfer, and arrival.

An automated baggage orientation and positioning functionality is established through a Portable Item Locator and Orientation Tag (PILOT (1110)), defined by the present disclosure. PILOT (1110) is configured to standardize the identification and orientation of baggage (1100, 1200) within GARD (2000), to maintain continuous traceability through ConSys (8000), and to enable authenticated release at BACAP (7000).

The end-to-end system operates through three operational AirOps stages (AirOps designating Airport/Airline Operations), each corresponding to a major phase of baggage flow.

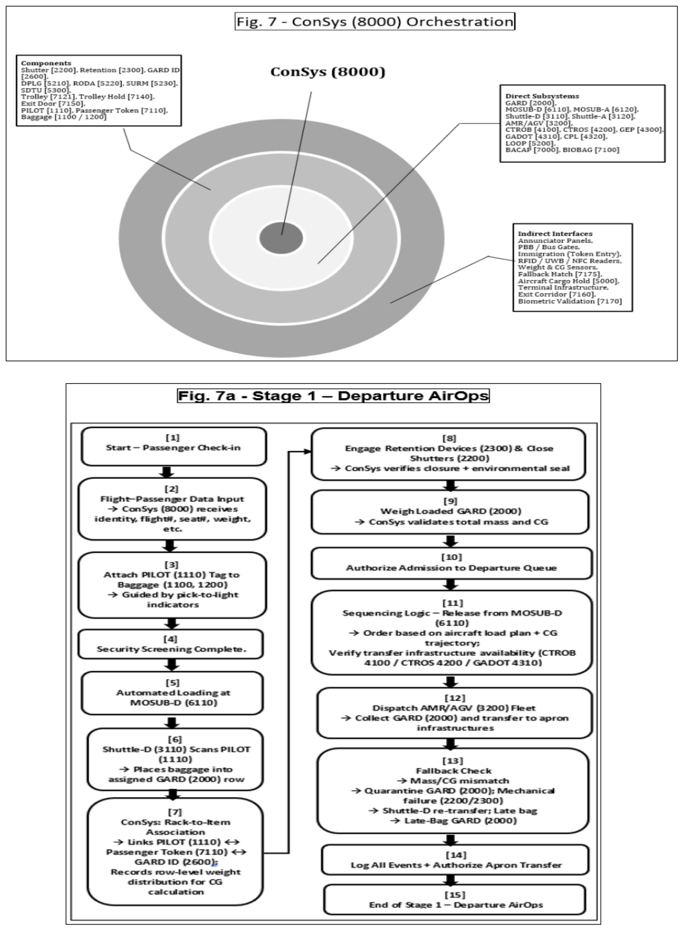

Stage 1 - Departure AirOps (departure terminal operations). Referring to Fig. 7a, GARD (2000) units are automatically loaded with baggage (1100, 1200) and staged at MOSUB-D (6110) for unmanned automated preparation. They are then conveyed toward the aircraft through the selected terminal-aircraft transfer infrastructure.

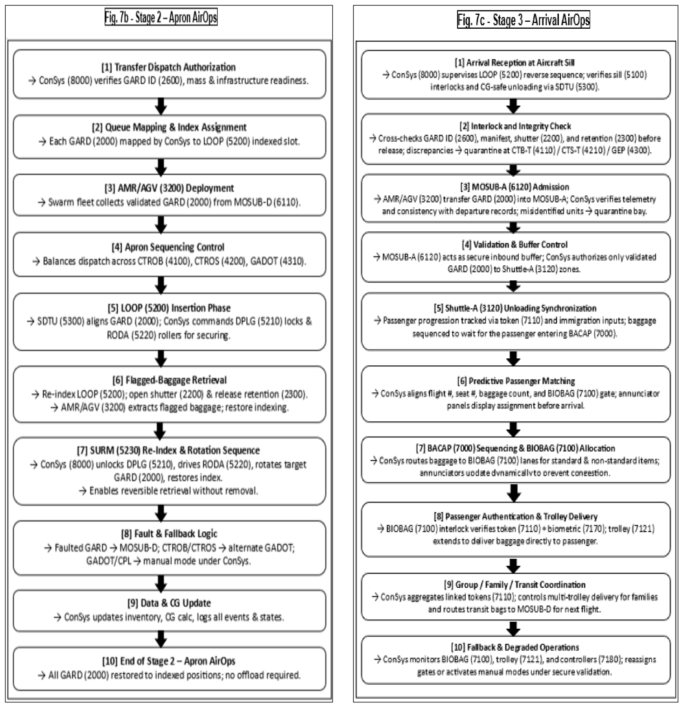

Stage 2 - Apron AirOps (apron operations). Referring to Fig. 7b, loaded GARD (2000) units are conveyed to or from the aircraft via transfer infrastructures as specified in [0009e], with fully digital monitoring and control and automated enforcement of handling processes across the apron, up to and from the aircraft sill (5100).

Stage 3 - Arrival AirOps (arrival terminal operations). Referring to Fig. 7c, GARD (2000) are unloaded from the aircraft and transported via the selected infrastructure and delivered to MOSUB-A (6120), where Shuttle-A (3120) allocates baggage (1100, 1200) for unmanned authenticated-passenger reclaim at a BACAP (7000) subsystem.

Technical effects. The disclosed system (1000) achieves multiple technical effects. It establishes continuous digital traceability and fully automatic control across all stages of baggage (1100, 1200) transfer, ensuring that every hand-off is digitally logged and verifiable. It enforces deterministic operations through all subsystems and functional areas, providing predictable cycle times for integration with optimal aircraft turnaround schedules. The system also enables the selective retrieval of a single flagged passenger baggage (1100, 1200) from a designated GARD (2000) within the cargo hold (5000), accomplished within minutes. This retrieval is performed without unloading other GARD units positioned ahead of the targeted GARD, as is required in conventional cargo hold (5000) retrieval practices. Upon arrival, the BACAP (7000) subsystem ensures authenticated-passenger baggage (1100, 1200) reclaim orders under automation-dependent conditions. Collectively, these effects contribute to reduced turnaround times, improved cost efficiency, enhanced service quality, and higher operational reliability for all stakeholders.

Infrastructure neutrality. The disclosed system is independent of any single transfer infrastructure. In other words, whether GARD (2000) are delivered or retrieved to or from the aircraft sill (5100) via CTROB (4100), CTROS (4200), or the conventional GEP (4300)-GADOT (4310)-CPL (4320) chain, the MOSUB buffers (6110 and 6120), Shuttle units (3110 and 3120), the aircraft sill (5100)-boundary modules (ETRA (4230), SDTU (5300)), and downstream LOOP (5200) indexing remain identical. This ensures applicability across a range of airport layouts and investment levels.

### BRIEF DESCRIPTION OF THE DRAWINGS

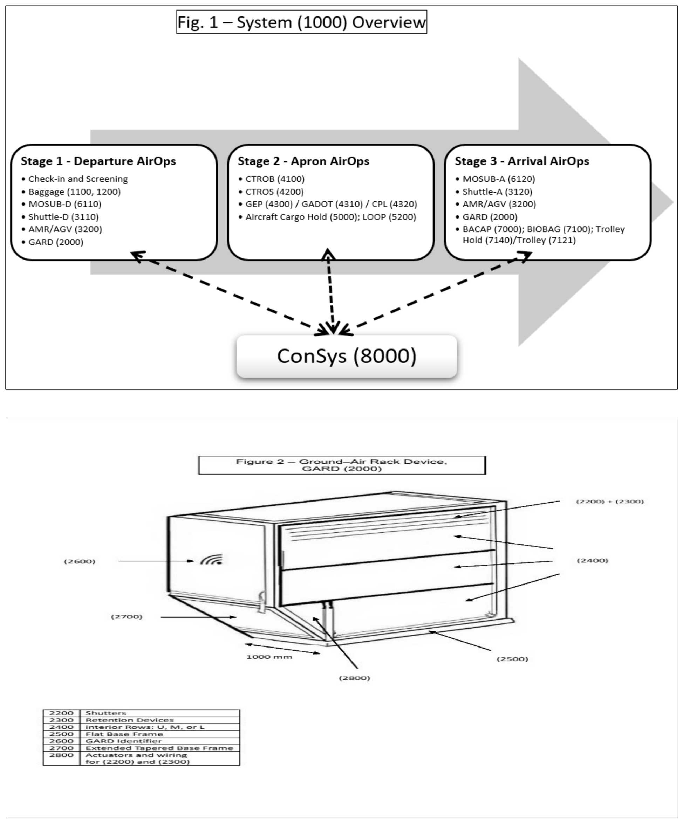

Figure 1 is a system overview of the end-to-end automated baggage-handling system (1000), illustrating the three operational stages-Stage 1 (Departure AirOps), Stage 2 (Apron AirOps), and Stage 3 (Arrival AirOps).
Figure 2 shows a Ground-Air Rack Device (GARD 2000) provided with shutters (2200), retention devices (2300), interior rows (2400), flat base frame (2500), GARD identifier (2600), extended tapered base frame (2700), and actuators and wiring (2800) for operating the shutters (2200) and retention devices (2300). The GARD (2000) defines a dual-purpose racked container that can be secured within the aircraft cargo hold or used for ground staging operations.

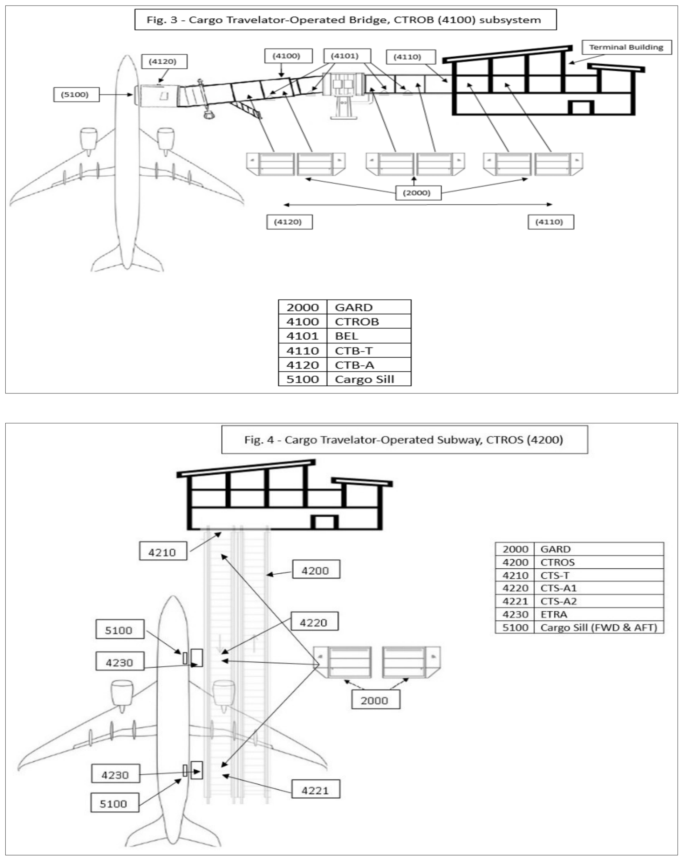

Figure 3 shows a Cargo Travelator-Operated Bridge (CTROB 4100) positioned between the terminal building and the aircraft sill (5100). The bridge comprises terminal module CTB-T (4110), aircraft module CTB-A (4120), and base-edge locks (BEL 4101). The arrangement allows powered, sealed transfer of GARD (2000) units between the terminal and aircraft without manual handling.
Figure 4 shows a Cargo Travelator-Operated Subway (CTROS 4200) extending between the terminal building and the aircraft sills (5100). The system includes terminal portal CTS-T (4210), forward portal CTS-A1 (4220), aft portal CTS-A2 (4221), and an Elevating Transfer and Alignment module (ETRA 4230). The CTROS (4200) provides a protected subsurface route for automated conveyance of GARD (2000) units beneath the apron area.

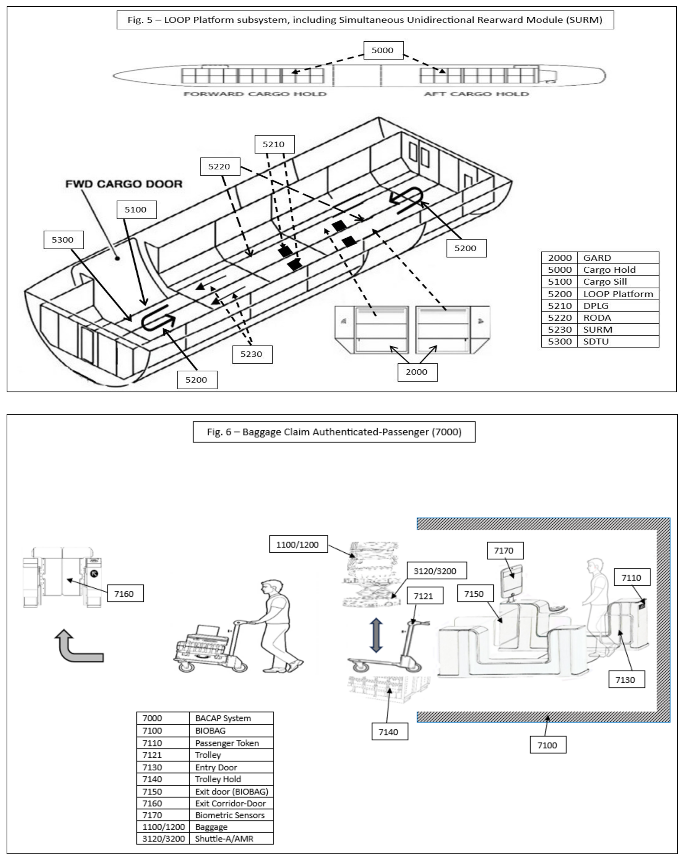

Figure 5 shows the aircraft cargo-hold platform (5000) incorporating the Logistics Obround Orchestrated Platform (LOOP 5200) with its principal modules: the Dense Pop-Up Lock Grid (DPLG 5210), Roller Drive Assembly (RODA 5220), Simultaneous Unidirectional Rearward Module (SURM 5230), and Smart Door Transfer Unit (SDTU 5300). These subsystems cooperate to index and secure each GARD (2000), create a temporary clearance path for selective retrieval, and maintain continuous automated transfer through the aircraft sill (5100).
Figure 6 shows the Baggage-Claim for Authenticated-Passenger subsystem (BACAP 7000) with Biometric Baggage-Claim Gate (BIOBAG 7100), passenger token (7110), trolley (7121), entry door (7130), trolley hold (7140), exit door (7150), exit corridor-door (7160), and biometric sensors (7170). The arrangement depicts the authenticated-claim process in which baggage (1100, 1200) is transferred from Shuttle-A/AMR (3120/3200) into BIOBAG (7100) for passenger verification and secure hand-off.
Figure 7 is a schematic of the Central Control System (ConSys 8000), illustrating direct subsystem orchestration-including GARD (2000), MOSUB-D (6110), MOSUB-A (6120), Shuttle-D (3110), Shuttle-A (3120), AMR/AGV (3200), CTROB (4100), CTROS (4200), GEP (4300), GADOT (4310), CPL (4320), LOOP (5200), and BACAP (7000)-and indirect interfaces with airport systems such as biometric validation (7170), terminal annunciators, and exit corridor-doors (7160). The diagram represents the layered control architecture by which ConSys (8000) supervises all subsystems and interfaces.
Figure 7a illustrates Stage 1 - Departure AirOps workflow. The process covers passenger check-in, flight-data input to ConSys (8000), PILOT (1110) tag attachment to baggage (1100, 1200), and automated loading at MOSUB-D (6110). Shuttle-D (3110) scans the PILOT (1110), places baggage in the assigned GARD (2000), and associates it with the passenger token (7110). ConSys (8000) then validates weight and configuration, authorizes sequencing to CTROB (4100) or CTROS (4200), and commands AMR/AGV (3200) dispatch for apron transfer under monitored conditions.
Figure 7b illustrates Stage 2 - Apron AirOps workflow. ConSys (8000) verifies GARD ID (2600) and authorizes transfer from MOSUB-D (6110) to the cargo hold (5000). Each GARD (2000) is mapped to an indexed slot on the LOOP (5200), guided by SDTU (5300) for sill alignment. The process sequence includes insertion, locking by DPLG (5210), drive by RODA (5220), and flagged-baggage retrieval or SURM (5230) re-indexing as required. Fault and fallback logic enable isolation or rerouting through alternate CTROB/CTROS or GADOT/CPL paths, with ConSys (8000) logging all states and center-of-gravity updates.
Figure 7c illustrates Stage 3 - Arrival AirOps workflow. Upon arrival, ConSys (8000) commands LOOP (5200) to reverse sequence and supervises SURM (5230) unloading via SDTU (5300). MOSUB-A (6120) receives inbound GARD (2000) units, verifies integrity through shutter (2200), retention (2300), and telemetry checks, and authorizes valid transfers to Shuttle-A (3120). Passenger tokens (7110) synchronize with BACAP (7000) gates (7100), where BIOBAG (7100), trolley hold (7140), and trolley (7121) cooperate to deliver baggage (1100, 1200) after biometric validation (7170).

### DETAILED DESCRIPTION OF THE INVENTION

The invention is described in further detail with reference to the embodiments illustrated in Figures 1-7. These embodiments explain the principles and technical implementation of the system (1000). It will be understood that variations and modifications may be made to the embodiments described herein without departing from the scope of the invention as defined in the appended claims. Reference numerals are used consistently throughout the description to identify corresponding components and functional areas.

### 1. General Overview of the System

Referring to Fig. 1, the system (1000) establishes a continuous and fully automated, unmanned baggage handling flow, integrating terminal staging, transfer infrastructures, in-hold positioning, and authenticated baggage claim. Each subsystem and functional area defined in the Summary is technically interlinked, ensuring a deterministic and end-to-end process without manual intervention.

Baggage (1100, 1200) designates the transported passenger items handled by the system (1000). Each baggage (1100, 1200) item is treated as an individually identifiable unit that progresses through defined processes from departure handover to arrival release. The invention is configured to maintain continuous traceability of baggage (1100, 1200) throughout these processes.

Identification and orientation means associated with baggage (1100, 1200) are provided to support automated handling and authenticated release. The detailed implementation of such means is described in a dedicated section of this detailed description.

The orchestration of all subsystems is supervised by ConSys (8000), which enforces advisory and supervisory operability across all end-to-end handling processes. ConSys (8000) ensures that baggage (1100, 1200) remains traceable, secured, and retrievable at every stage of departure, apron transfer, and arrival.

### 2. Ground-Air Rack Devices (GARD) (2000)

Referring to Fig. 2, GARD (2000) are modular rack units configured to receive, accommodate, and secure baggage (1100, 1200). Unlike conventional Unit Load Devices (ULDs) limited to aircraft use, GARD (2000) serve a dual role across both ground facilities and aircraft cargo compartments (5000). On the ground, they operate as fully automated, unmanned mobile storage units that replace large static conveyor-based storage zones; in aircraft operations, they function as standardized containers for baggage (1100, 1200), into and out of the cargo hold (5000). In all embodiments, Ground-Air Rack Devices (GARD 2000) are conveyed exclusively by unmanned, fully automated handling subsystems described herein, distinguishing them from conventional manually handled containers or ULDs. While partial automation concepts exist in which robotic arms or semi-automatic devices assist with baggage-to-ULD handling, these implementations do not achieve full unmanned continuity and still depend on human intervention for positioning, securing, or verification. Main components of GARD (2000) include shutters (2200), retractable straps or hinged bars (2300), interior rows (2400), and base frame (2500), which are described in the subsequent paragraphs. Related components will be mentioned as the description is needed.

Shutter doors (2200) are located on both longitudinal faces. Shutters enclose the baggage compartment to protect baggage (1100, 1200) against adverse weather conditions, foreign object debris, theft, and other ramp hazards. They may be roller- or slide-type operated, with either top-down or left-right opening configurations. Actuation may be performed by actuators - one for each shutter - such as compact linear electric actuators, rotary servo motors with geared linkages, or stepper-motor driven actuators, which are housed in the tapered side sections ETBF (2700) of GARD (2000). These tapered sections also provide protected routing for wiring and electrical connections. A manual fallback mechanism, such as a quick-release lever, enables operation under degraded conditions or power loss. Once GARD (2000) is fully loaded at MOSUB-D (6110), shutters (2200) are closed and locked, and remain closed until the GARD (2000) unit is secured inside the cargo hold (5000). Where selective baggage extraction is required, shutters (2200) may be opened at the aircraft sill (5100) for flagged baggage retrieval, then closed and locked for the duration of the flight.

A rack-mounted identification and sensing module, the GARD identifier, hereafter defined as GARD ID (2600), provides a unique identifier, baggage count, payload weight, passenger association (seat number, passenger ID), shutter state, and telemetry data to ConSys (8000). The GARD ID (2600) may include passive or active Radio-Frequency Identification (RFID), Ultra-Wideband (UWB) tags, and proximity sensors to support automated docking and handling of GARD (2000); all GARD (2000) trajectories are orchestrated by ConSys (8000), which monitors, controls, and executes them to centralize the end-to-end operations.

Structural frame and stability features: The base frame (2500) incorporates standardized locating and locking interfaces for repeatable positioning with AMR/AGV (3200), CTROB (4100), CTROS (4200), GADOT (4310), and LOOP (5200). GARD (2000) employs a flat-base outer surface without protrusions, ensuring seamless transfer on ball-mat decks and powered roller systems within cargo hold (5000), and adaptability to the chosen AMR/AGV (3200) deck geometry. The telemetry system of each GARD (2000) may include distributed sensors integrated in or associated with the base frame (2500) or side structures to collect load, vibration, and environmental data for evaluating structural durability and predicting maintenance requirements. Mobility of each GARD (2000) between the aircraft and terminal zones is facilitated by the terminal-aircraft infrastructures, as described in subsequent sections.

Interior storage rows (2400): The interior height of GARD (2000) is subdivided into storage rows (2400), which organize baggage (1100, 1200). Two rows may be used for narrow-body aircraft and three rows for wide-body aircraft. Clearance allowances of 15-25 mm above and 15-20 mm laterally are engineered for automated loading/unloading by Shuttle units (3100). Rows are designated Row-U (upper), Row-M (middle), and Row-L (lower) for a three-row configuration, and without a middle row for a two-row configuration. To ensure cross-aircraft compatibility, the internal rack depth (front-rear depth) is limited to 900 mm, and the external depth is limited to 1000 mm, including shutters (2200). This dimensional constraint ensures accessibility via different widthwise cargo door configurations for both narrow- and wide-body aircraft. Heights and lengths of GARD (2000) units are adapted to each aircraft type, while standardizing GARD (2000) width dramatically simplifies handling across fleets and reduces constraints imposed by cargo door geometry. Weight distribution across rows (2400) is measured and continuously recorded by ConSys (8000) to support aircraft weight-and-balance calculations, customs inspection routing, and rapid retrieval of flagged baggage.

In one embodiment, non-standard baggage (1200) is accommodated in dedicated GARD (2000) units with the same external geometries that comply with the design for narrow-body and wide-body aircraft accordingly. However, these non-standard baggage (1200) units may not embed interior rows or may be internally configured differently to accommodate their dimensions. These GARD (2000) units structurally preserve standardized external interfaces compatible with AMR/AGV (3200), CTROB (4100), CTROS (4200), CPL (4320), door sills (5100) configurations, and LOOP (5200) geometries. Each GARD (2000) unit - dedicated to accommodating non-standard baggage (1200) - remains under ConSys (8000) orchestration and is subject to the exact weighing, telemetry, and restraint logic as GARD (2000) units for baggage (1100), ensuring uniform traceability, security, and compliance across all baggage categories.

Retention devices and containment features: Referring to Fig. 2, retention devices (2300), such as retractable straps or hinged bars, automatically secure baggage (1100, 1200) once loading is complete. Unlike shutters (2200), which provide environmental protection and prevent unauthorized access, retention devices are dedicated to restraining baggage (1100, 1200) against dynamic loads. These mechanisms are rated to withstand at least 2.5 g-loads laterally and 3.0 g-loads longitudinally, ensuring baggage (1100, 1200) remains secured during turbulence, braking, or emergency maneuvers. The strap mechanism follows a similar actuation principle as the shutters (2200), with actuators housed in the tapered sections of GARD (2000), and each strap equipped with a manual fallback option, such as ratchets or quick-release locks, in case of power failure. ConSys (8000) monitors actuation states and confirms that retention devices are engaged adequately before authorizing subsequent process steps. Optional fire-resistant lining panels, shock-damping pads, and tamper-evident seals further enhance protection and resilience.

Electrical power and connectors: Each GARD (2000) is equipped with an integrated plug-type power connector arranged and configured to achieve self-alignment with the corresponding receptacle connector mounted at the aircraft sill (5100) and at the MOSUB (6100) zone. The plug and receptacle together form a mating connector pair designed to accommodate variations in aircraft-specific connector positioning. This interface enables GARD (2000) to be energized for operating shutters (2200), retention devices (2300), and the GARD ID (2600) for telemetry and data communication. The connector is sealed against ingress, protected against overcurrent, and rated for repeated coupling cycles to guarantee safe and reliable operation throughout the service life of GARD (2000).

In compliance with CS-25 Subpart D - Design and Construction (CS 25.855 Cargo or baggage compartments), the GARD (2000) is configured to remain electrically passive during flight and whenever it is not mechanically docked to a powered interface. Temporary energization occurs only while the GARD (2000) is in mechanical contact with inductive or conductive pads integrated in AMR/AGV (3200) decks, MOSUB (6100) cradles, or transfer-infrastructure conveyors of CTROB (4100), CTROS (4200), or GADOT/CPL (4310/4320). These interfaces employ commercially available contactless-power technologies of the inductive or conductive type, for example of the kind marketed under trade names such as IPT^{®} or Movitrans^{®}, each capable of providing short-duration energization under automatic isolation control. During such docked states, ConSys (8000) authorizes power transfer to operate shutters (2200), retention devices (2300), and GARD ID (2600) telemetry or data synchronization. When the GARD (2000) undocks or the aircraft transitions to flight mode, the inductive field or contact voltage is automatically interrupted, and all internal circuits of the GARD (2000) become electrically neutral. Thus, no battery, capacitor bank, or heat-producing device is carried within the cargo compartment, while full operational functionality is maintained whenever external energization points are available.

Integrated safety management features: At the GARD (2000) level, shutters (2200), retention devices (2300), and optionally fire-resistant liners, vibration-damping pads, and tamper-evident seals collectively provide layered safety. These elements operate independently but are orchestrated by ConSys (8000), which monitors their states and confirms safe conditions before authorizing further process steps, while fallback mechanisms described in preceding sections ensure continued safe operation under degraded conditions. This ensures baggage (1100, 1200) remains shielded from environmental hazards, physically restrained against dynamic loads, and secured against unauthorized access throughout the end-to-end process.

Maintainability provisions: GARD (2000) is designed with modular wear components, such as latch springs, shutter seals, and rollers, which are replaceable to minimize downtime. ConSys (8000) monitors usage parameters, including latch actuation counts and load histories, to enable predictive maintenance scheduling. The technical effect is reduced downtime and improved operational availability, directly supporting efficient turnaround operations.

Combined technical effects: The combined technical effect of GARD (2000) is to transform baggage handling from a fragmented, manual, and siloed process into a fully integrated, unmanned, and automation-ready architecture. Unlike conventional ULDs or bulk loading, GARD (2000) enables:
(i) a standardized-width configuration that ensures accessibility across narrow- and wide-body fleets while allowing adaptable height and length to match cargo hold (5000) geometries,
(ii) seamless hand-off between AMR/AGV (3200) and the interfaces CTROB (4100), CTROS (4200), and GADOT (4310). Consequently, GARD hand-off to LOOP (5200), MOSUB (6100), and BACAP (7000) without manual handling,
(iii) continuous protection of baggage (1100, 1200) against weather, theft, and damage through shutters (2200), while simultaneously securing baggage (1100, 1200) against g-loads with integrated retention devices (2300),
(iv) integrated electrical-power and telemetry capability within GARD (2000) units, enabling them to remain energized and network-connected within the cargo hold (5000) and terminal environments for command-based handling operations, including selective flagged-baggage retrieval, and
(v) predictable lifecycle management through modular replacement, digital retirement certification, and structural durability monitoring, wherein the telemetry system of each GARD (2000) can monitor load and environmental parameters to evaluate structural durability and predict maintenance requirements.
These effects collectively result in shorter aircraft turnaround times, reduced dependency on ground manpower, and higher baggage traceability and security. They further contribute to enhanced sustainability through optimized energy usage and material efficiency, minimized ground-handling emissions, and reduced airport space requirements for baggage-storage infrastructure. The integrated automation also lowers operational complexity and maintenance expenditure, enabling more efficient utilization of airport resources.
As a result, GARD (2000) is not merely a container but the central enabler of automation-driven coordination and integration within the fully automated end-to-end baggage-handling system (1000), compared to conventional ULDs that lack the interfaces, safety functions, and compatibility required to support unmanned, fully automated baggage-handling operations.

### 3. Transfer Infrastructures (4000)

Referring to Figs. 2 and 3, the system (1000) integrates transfer infrastructures that operate during Stage 2 AirOps ("Apron" operations) to enable GARD (2000) automated guidance between the terminal building and the cargo hold (5000), under continuous ConSys (8000) monitoring and control. Two of these infrastructures, CTROB (4100) and CTROS (4200), replace conventional belt loaders, ULD dollies, and manual hand-offs with a continuous, automated sequence, while GADOT (4310) extends the currently practiced conventional system functionality by adapting dolly-train operations into the automated and digitally traceable framework of this system (1000). At least one of CTROB (4100) or CTROS (4200) is mandatory to achieve full end-to-end automation in Stage 2 apron operations. For any given Passenger Boarding Bridges (PBB) gate stand, either CTROB (4100) or CTROS (4200) is used as the primary infrastructure. At the same time, GEP (4300) and GADOT (4310) remain available as backup in case of failure of the primary system, and as the standard transfer mode for remote (non-PBB) stands.

### 3a. Cargo Travelator-Operated Bridges (CTROB) (4100):

Referring to Fig. 3, in one embodiment, CTROB (4100) is constructed as an enclosed telescopic bridge structure, conceptually analogous to a PBB in its extendable architecture but specifically engineered for the conveyance of GARD (2000). Each CTROB (4100) comprises two or more telescopic bridge sections that extend and retract relative to one another, with sealing interfaces to prevent ingress of weather, dust, or foreign-object debris (FOD). The interior of CTROB (4100) accommodates a powered conveyance system-such as a travelator, belt, or roller-mat assembly-electrically driven to transport GARD (2000) units between CTB-T (4110), CTB-A (4120), and the aircraft sill (5100).

CTB-T (4110) is structurally integrated with the terminal building, enabling direct interface with the staging hall where GARD-loaded AMR/AGV (3200) are positioned to initiate the handover sequence into CTROB (4100). CTB-A (4120) provides an enclosed and automation-enforced handover zone for transferring GARD (2000) into the cargo hold (5000). CTB-A (4120) is configured to dock to the aircraft sill (5100) using a docking approach derived from PBB practices but adapted for the transfer of GARD (2000) units, ensuring alignment of the CTROB (4100) conveyor system with the LOOP (5200) subsystem. In all embodiments, the transition through CTB-T (4110) and CTB-A (4120), as well as the entire CTROB (4100) conveyor path, is supervised by ConSys (8000) to ensure authenticated digital traceability and control from entry to exit.

Each CTROB (4100) comprises multiple telescopic bridge sections, which extend and retract relative to one another to span the distance between CTB-T (4110) and CTB-A (4120). Within each telescopic section, the conveyorized deck is subdivided into motorized drive zones, each zone dimensioned to carry no more than two GARD (2000) units positioned rear-to-rear. A typical drive zone length is approximately 5 m, corresponding to the footprint of two GARD (2000) units, so that a 10 m telescopic section may comprise two independently controlled zones. This subdivision ensures that per-zone load never exceeds 2,250 kg, allowing predictable motor sizing and control logic irrespective of bridge extension length. When CTROB (4100) is fully extended, the telescopic sections terminate in flush-aligned butt joints, and the conveyor surfaces of adjacent drive zones form a continuous co-planar deck through driven nose rollers and tapered alignment pins. ConSys (8000) synchronizes the speeds of adjacent zones to maintain uniform surface velocity, ensuring uninterrupted and frictionless transfer of GARD (2000) across sectional joints.

Structure: In commercial passenger aircraft, cargo doors are typically located on the right-hand side-one forward and one aft of the wing. The terminal-side entry module of CTROB (4100), integrated with CTB-T (4110), incorporates drive-zone weighing modules with embedded load cells distributed along the powered conveyance deck. CTROB (4100) can be adapted for brownfield or greenfield integration to serve forward and aft cargo compartments. While forward installation allows direct terminal connection, a parallel CTROB (4100) may serve the aft compartment, where routing to the aft cargo door is limited by wing-clearance and apron-safety constraints determined by parking-stand geometry.

Loading Operations: At the CTB-T (4110) entry, when a GARD (2000) is positioned on the powered travelator, the Base-Edge Locks (BEL 4101) secure the unit. As the GARD (2000) moves along the deck, embedded load cells capture and average weight data, comparing it with GARD ID (2600) information from MOSUB-D (6110) to verify load consistency and detect imbalance. Only units within predefined mass tolerances-typically about ±1-2 % of the planned value-are admitted into CTROB (4100). Accepted units travel from CTB-T (4110) to CTB-A (4120), are released, pass through the Smart Door Transfer Unit (SDTU 5300), and advance into LOOP (5200) for aircraft loading.

ConSys (8000) Integration. ConSys (8000) verifies identity, weight, and per-row distribution against the flight Load Plan and Center of Gravity (CG) limits. It maintains a real-time aircraft mass-properties model based on a Load Plan computed before apron transfer. Each GARD (2000) is weighed and its per-row distribution confirmed at MOSUB-D (6110), and these values are embedded in the GARD ID (2600). Aircraft type, Manufacturer Serial Number (MSN), and certified CG envelope data are preloaded into ConSys (8000) before the aircraft arrives at the stand. For each proposed motion through CTROB (4100), ConSys (8000) predicts total weight, total moment, and CG position. Motion is inhibited if the resulting state would breach the certified envelope. Conveyor load sensors and LOOP (5200) reaction cells act as verification points, detecting discrepancies but not replacing MOSUB-D (6110) weighing as the primary mass source.

Sequencing. GARD (2000) are dispatched from MOSUB-D (6110) toward CTB-T (4110) in the order defined by the Load Plan so that the queue arriving at CTROB (4100) respects aircraft balance requirements. ConSys (8000) gates admission at CTB-A (4120) to ensure only load movements consistent with safe CG progression are executed. Where both forward and aft holds are served (if the aft CTROB (4100) embodiment is adopted), CTROB (4100) enforces pairwise scheduling between the portals to maintain balance; in single-hold service, GARD (2000) are sequenced row-by-row and unit-by-unit to keep the CG within certified limits. Each transfer cycle handles exactly one GARD (2000) at a time, minimizing transients and ensuring precise balance control. To preserve door-proximity access for transit baggage even if the first-in-sequence GARD (2000) is quarantined, ConSys (8000) reserves specific LOOP (5200) positions adjacent to the relevant sill (5100) as "priority slots" for the affected destination class. If the quarantined unit is not yet cleared, subsequent non-conflicting GARD (2000) proceed to their planned positions while the reserved priority slot remains unoccupied. When the quarantined unit is verified, it is inserted directly into its reserved slot without reshuffling previously loaded units. If operationally required, ConSys (8000) may reallocate the reserved slot to an equivalent, door-proximate slot of the same accessibility class (e.g., same row and retrieval access) to maintain transit priority and turnaround efficiency, while always keeping CG within limits. The technical effect is that transit-priority near-door access is maintained without backtracking or rehandling, even when the first planned unit undergoes verification.

Quarantine and Fallback. Out-of-tolerance readings trigger automatic quarantine logic (hold-in-place, alarm, and retrieval by the assigned GARD (2000)-loaded AMR/AGV (3200), which removes the flagged unit from CTB-T (4110) for recheck and verification before re-entering CTROB (4100)). In degraded or fallback mode, if the assigned AMR/AGV (3200) is unavailable, the flagged GARD (2000) may be offloaded manually via a side-access platform equipped with torque-limited actuators and interlocked gates, ensuring safe removal without compromising system integrity. The technical effect is that non-conforming units are intercepted at the terminal interface and safely isolated without disrupting the overall departure sequence.

Unloading Operations. In this mode, the process is executed in reverse. GARD (2000) units are released from LOOP (5200), transferred across SDTU (5300), and advanced into CTB-A (4120). From CTB-A (4120), the conveyorized path retracts them through the telescopic bridge sections toward CTB-T (4110). At CTB-T (4110), weighing and verification modules confirm identity and measured weight against the inbound flight manifest to prevent smuggling, substitution, or tampering of a GARD (2000) if it was interfered with in-flight (rare but critical) before release to AMR/AGV (3200) for delivery to MOSUB-A (6120). Out-of-tolerance or misidentified units are quarantined at CTB-T (4110) for recheck, with retrieval by AMR/AGV (3200) or manual fallback via the side-access platform. ConSys (8000) supervises the unloading order to maintain the Center of Gravity (CG) compliance, applying the same pairwise or constrained-single logic as in departure. GARD (2000) units with transit baggage are prioritized from door-proximate LOOP (5200) slots to support minimum connection times. The technical effect is a mirrored unloading process that preserves CG safety, turnaround efficiency, and digital traceability from sill (5100) to the arrival terminal.

Stabilization of GARD (2000) during transfer across CTROB (4100) is achieved by BEL (4101). In a preferred embodiment, BEL (4101) are implemented as sidewall-pivot locks, stored in slim housings and configured to pivot inward to embrace the side frame of GARD (2000). This prevents uplift, lateral drift, or unintended movement on inclined or declined deck sections without requiring modifications to the GARD (2000) base frame. The arrangement avoids protruding devices on the conveyor floor, reduces wear and downtime, and ensures an uninterrupted rolling surface across the conveyor deck.

Each conveyor zone of CTROB (4100) is equipped with torque-limited drives, regenerative braking on downhill segments, and motoring assistance on uphill segments. BEL (4101), together with anti-rollback devices, secure the GARD (2000) in all operating conditions. The locks disengage only when ConSys (8000) authorizes progression, ensuring secure staging in forward transfer, fine positioning adjustments, and controlled return of GARD (2000) units toward CTB-T (4110) when required under specific operating or degraded modes.

Safety functions integrated into CTROB (4100) include infrared curtains at access points, deck pressure sensors verifying GARD (2000) presence, Closed-Circuit Television (CCTV) for continuous monitoring, and operational lighting. ConSys (8000) inhibits activation of the CTROB (4100) conveyor drive zones until weighing and verification at CTB-T (4110) are complete, the bridge has reached its fully extended position, CTB-A (4120) is securely attached to the aircraft fuselage, and the sill (5100) cargo door is confirmed open through door-position interlocks. These combined confirmations ensure that the transfer path is physically established and safe before any GARD (2000) movement is initiated. At CTB-A (4120), an inflatable sealing collar deploys to establish a weather-sealed passage, protecting against fluid ingress, debris intrusion, and inadvertent contact with the aircraft fuselage. The technical effect of these interlocks is to ensure that CTROB (4100) operates only under safe and verified aircraft conditions, thereby preventing apron hazards around the fuselage, wings, and engines.

Serviceability and operational robustness of CTROB (4100) are supported by integrating its equipment and devices with ConSys (8000), which generates predictive maintenance alerts to optimize inspection intervals, minimize unplanned downtime, and ensure continued operability across varying airport conditions. The technical effect is increased system reliability, reduced operational costs, and uninterrupted baggage transfer performance within Stage 2 operations.

### 3b. Cargo Travelator-Operated Subway (CTROS) (4200):

Structure. Referring to Fig. 4, CTROS (4200) are subsurface tunnel infrastructures transferring GARD (2000) beneath apron surfaces. They perform the same Stage 2 function as CTROB (4100) (see [0037]-[0038]) but route flows underground through a flat, continuous conveyor with no telescopic sections. Access points include CTS-T (4210) at the terminal and dual CTS-A1 (4220) / CTS-A2 (4221) portals positioned at the forward and aft sill (5100). At these portals, ETRA (4230) lifts or lowers the units to and from the sill (5100) level, replacing the direct docking function of CTB-A (4120) in CTROB (4100).

Loading Operations. Except for the differences noted below, loading operations are identical to those of CTROB (4100) described in [0039a]-[0039a3]. At CTS-T (4210), GARD (2000) entry, weighing verification, ConSys (8000) integration, sequencing logic, and quarantine/fallback are performed as set out in [0039a1]-[0039a3]. The difference arises at CTS-A1 (4220) and CTS-A2 (4221), where GARD (2000) units are elevated from the CTROS (4200) conveyor to sill (5100) level via ETRA (4230), before ETRA (4230) and SDTU (5300) hand them over to LOOP (5200).

Unloading Operations. These operations mirror those of CTROB (4100) described in [0039b], including identity/weight verification, ConSys (8000) CG supervision, and transit-priority release. The difference is that GARD (2000) units arriving from LOOP (5200) are first lowered by ETRA (4230) into CTS-A1 (4220)/CTS-A2 (4221) before continuing along the flat CTROS (4200) conveyor toward CTS-T (4210).

Stabilization. As in CTROB (4100) [0042]-[0043], GARD (2000) stability is achieved by side restraints and drive synchronization under ConSys (8000) control. In CTROS (4200), low-profile edge guides are emphasized due to the continuous flat conveyor geometry.

Drive Equipment. Unlike CTROB (4100) [0041], CTROS (4200) employs a one-piece conveyor system without telescopic sections or subdivided drive zones. Motors are torque-limited, regenerative, and synchronized along the entire conveyor length, ensuring smooth progression despite subsurface thermal expansion joints.

Safety Functions. Except as noted below, CTROS (4200) safety functions are identical to those in CTROB (4100) [0042]. At CTS-A1 (4220)/CTS-A2 (4221), inflatable sealing collars and interlocked hatches protect the ETRA (4230) portals, ensuring safe transition between subsurface and aircraft fuselage interfaces.

Serviceability and Robustness. As in CTROB (4100) [0043], predictive maintenance alerts and modular conveyor components are provided. In CTROS (4200), maintenance shafts and underground access galleries are added to support inspection and replacement of conveyor segments in a subsurface environment.

### 3c. GARD Dolly Train (GADOT) (4310):

Structure. GADOT (4310) comprises a tow tractor and one or more GARD-adapted dollies configured to transport GARD (2000) units across the apron between terminal staging points and aircraft cargo doors. The acronym GADOT (4310) is inspired by and functionally equivalent to the "ULD Dolly Train" defined in the AHM, wherein a tow tractor (AHM 910) conveys multiple container/pallet dollies (AHM 913). Depending on operational requirements, and as an alternative embodiment to CTROB (4100) and CTROS (4200), GADOT (4310) is operated autonomously, in line with the progressive introduction of driverless tractors at modern airports. GEP (4300) are terminal-side areas where GARD (2000) units are staged for dispatch to or receipt from aircraft, functionally equivalent to conventional baggage make-up and breakdown zones. Similar to the interface between MOSUB (6100) and CTROB (4100)/CTROS (4200), AMR/AGV (3200) units handle the bidirectional transfer of GARD (2000) units between MOSUB (6100) and GEP (4300). At each GEP (4300), AMR/AGV (3200) autonomously position GARD (2000) units for collection by or delivery from GADOT (4310), under continuous monitoring and orchestration by ConSys (8000). ConSys (8000) supervises this entire exchange, sequencing, and digital traceability across MOSUB (6100) and sills (5100) bidirectionally. At aircraft stands located far from PBB-equipped gates, the conventional sill interface procedures are applied for GARD (2000) loading and unloading, but integrated within the GADOT (4310) framework to preserve full automation and traceability, all under the supervision and control of ConSys (8000).

Safety-enabled and secure interoperability: At the sill (5100) interface, GADOT (4310) synchronizes the automated handover and retrieval of GARD (2000) units through the upgraded CPL (4320), enabling fully automatic operation without manual intervention. The CPL (4320) integrates proximity sensors and alignment controls to precisely position and dock with the sill (5100), while preventing collisions with personnel or other ground service equipment (GSE). GADOT (4310) also employs geo-fencing, collision-avoidance sensors, and coordinated fleet management under ConSys (8000) supervision, ensuring safe, synchronized, and uninterrupted operations across the apron.

Serviceability and Robustness. As with CTROB (4100) [0043] and CTROS (4200) [0048], predictive maintenance is generated by ConSys (8000). For GADOT (4310), this includes tractor fleet management (battery charge cycles, tire wear, sensor calibration) and modular dolly upkeep. Weather covers and FOD-resistant wheel assemblies extend operating life in harsh apron environments.

Alternative Embodiments. In one embodiment, GADOT (4310) may operate as a hybrid deployment in parallel with CTROB (4100) or CTROS (4200), serving remote aircraft stands while fixed infrastructures serve PBB-equipped gates. In another embodiment, GADOT (4310) is exclusively deployed in airports with wide aprons or limited capital investment, providing a scalable, mobile alternative to fixed Stage 2 infrastructures.

Fallback Operations. As described in [0039a3], out-of-tolerance or misidentified GARD (2000) units are quarantined at MOSUB (6100) before dispatch to GEP (4300). In degraded mode, tractors may be operated manually to ensure service continuity, while digital traceability is maintained by ConSys (8000).

Technical Effect of Transfer Infrastructures. CTROB (4100), CTROS (4200), and GADOT (4310) collectively transform Stage 2 apron operations from fragmented, labor-intensive, and weather-exposed processes into a unified, automation-enforced backbone of the end-to-end baggage handling system (1000). The disclosed infrastructures provide three interoperable deployment options-flyover (CTROB (4100)), underground (CTROS (4200)), and land-based (GADOT (4310)/CPL (4320)) that can be implemented based on apron layout, airport configuration, and operational requirements.
Compared with conventional belt loaders and ULD dollies, the invention achieves:
(i) shorter turnaround times, by eliminating manual baggage (1100, 1200) re-handling and enabling parallelized loading and unloading through multiple portals,
(ii) improved safety, by reducing personnel presence in aircraft movement areas and replacing ground service equipment congestion with automated, geo-fenced transfer paths,
(iii) operational resilience, through multi-modal redundancy whereby continuity of service is maintained even if one transfer mode is unavailable,
(iv) predictable and synchronized cycle times, enabling precise control of transfer sequences under ConSys (8000),
(v) reduced ground service equipment usage, since apron movements are consolidated under automated infrastructures, and
(vi) sustainability improvements, through integration of electric tractors, regenerative drives, and reduced apron vehicle traffic, lowering emissions in line with ICAO and IATA environmental standards.
The combined technical effect is that Stage 2 baggage transfer evolves from a single-mode, interruption-prone process into a continuous, automation-controlled subsystem that integrates seamlessly with MOSUB (6100), LOOP (5200), and ConSys (8000), thereby enhancing efficiency, safety, and environmental performance across different airport infrastructures.

### 4. Aircraft Cargo Hold (5000)

Referring to Fig. 5, the system (1000) comprises an aircraft cargo hold subsystem (5000). In one embodiment, the hold (5000) comprises a Logistics Obround Orchestrated Platform (LOOP (5200)). LOOP (5200) is configured as a cargo-hold floor-integrated guiding framework shaped in an obround geometry, comprising two substantially linear floor segments joined by curved ends to form a racetrack-like loop. The platform is further orchestrated, meaning that the obround geometry is inseparably combined with active sequencing and indexing control. Under the command of ConSys (8000), GARD (2000) units are advanced stepwise, aligned precisely, and repositioned along the obround path. In this embodiment, LOOP (5200) unites a distinctive structural geometry with automated orchestration to enable orbital-like circulation of GARD (2000) units within the aircraft cargo compartment (5000). In another embodiment, LOOP (5200) comprises a method (obround indexing sequence), a controller such as a Programmable Logic Controller (PLC (5240)) configured to execute sequencing logic, and actuated hardware (including lock grids and drive assemblies), collectively configured to enable precise positioning of GARD (2000) at the aircraft cargo door sill (5100) or at indexed stations within the hold. In all embodiments, LOOP (5200) achieves its full technical effect only in coordination with transfer infrastructures (CTROB (4100), CTROS (4200), GADOT (4310)/CPL (4320)), MOSUB (6100), BACAP (7000), and ConSys (8000) subsystems, thereby operating as one part of the end-to-end baggage handling system (1000).

**In** one embodiment, LOOP (5200) comprises several coordinated hardware subsystems that together transform the hold (5000) floor into an active circulation platform. A Dense Pop-up Lock Grid (DPLG (5210)) comprises addressable, retractable lock heads arranged on longitudinal rails at fine pitch intervals. Each lock head is independently controlled, enabling programmable engagement of forward and aft restraint rows that secure every GARD (2000) at its indexed station in compliance with EASA CS-25 cargo restraint requirements (CS 25.787 and CS 25.789), which mandate restraint capability for loads of 9 g-loads forward, 1.5 g-loads lateral, 3 g-loads downward, 2 g-loads upward, and 3 g-loads aft. When engaged, the lock heads withstand these multi-directional loads, thereby replacing conventional ULD restraint fittings.

A Roller Drive Assembly (RODA (5220)) comprises floor-mounted powered rollers positioned flush with the LOOP (5200) floor surface. When actuated, the rollers are configured to apply direct traction against the underside edges of the GARD (2000) base frame, advancing the unit forward or aft by one standardized pitch length Δ. Encoder feedback is configured to verify displacement accuracy to within millimetric tolerances. The rollers operate in conjunction with the DPLG (5210): first, the destination lock heads are configured to rise; then the origin locks release; rollers advance the GARD (2000); finally, the destination locks engage to capture the unit in its new indexed position. This lock-release-roll-lock cycle is configured to repeat deterministically under ConSys (8000) supervision, ensuring that no GARD (2000) is ever left unsecured.

At the sill (5100), the Smart Door Transfer Unit (SDTU (5300)) is configured to deliver powered staging, fine alignment, and positive insertion of GARD (2000) into LOOP (5200), or extraction in the reverse direction. SDTU (5300) is further configured to interface in this stage with CTB-A (4120), ETRA (4230), or CPL (4320). All these interfaces are digitally interlocked with ConSys (8000), so transfer to or from LOOP (5200) cannot occur unless locks are engaged, the sill (5100) door position is verified, and the delivering or receiving interfaces confirm readiness.

In one embodiment, the combined technical effects of DPLG (5210), RODA (5220), and SDTU (5300) are configured to provide a stepwise, fully automated circulation process inside the hold (5000), replacing manual placement of conventional ULDs with fully automatic GARD (2000) units in digitally orchestrated motion, while ensuring positive restraint in compliance with CS-25 cargo safety requirements.

In one embodiment, LOOP (5200) is configured to enable selective retrieval of a targeted GARD (2000) positioned anywhere along the parallel lanes of the hold (5000), except for units already adjacent to the sill (5100). Under ConSys (8000) command, SURM (5230), DPLG (5210), and RODA (5220), all across both LOOP (5200) lanes, initiate a coordinated chain displacement of all GARD (2000) units until the targeted GARD (2000) reaches the sill (5100), beginning with the creation of a clearance margin at the cargo partition wall end of the hold (5000). This clearance ensures that all GARD (2000) units remain free from collision with the cargo hold (5000) walls, particularly when passing the flat cargo partition wall during the two successive 90° turns required for lane transition. Importantly, the entire process occurs without offloading any GARD (2000) outside the aircraft, thereby preserving sealed-in-hold integrity while maintaining uninterrupted LOOP (5200) circulation. Once the targeted GARD (2000) reaches the sill (5100), the Smart Door Transfer Unit (SDTU (5300)) aligns it with the sill interface. In the specific case of flagged baggage (1100, 1200) retrieval, instead of removing the unit from the aircraft, a dedicated AMR/AGV configured for sill-side operation accesses the internal racks of the targeted GARD (2000) and extracts only the flagged baggage (1100, 1200). The targeted GARD (2000) remains secured under DPLG (5210) restraint in the hold (5000), and normal LOOP (5200) circulation resumes once the retrieval mission is completed. Accordingly, upon completion of the retrieval, ConSys (8000) reverses the sequence of operations to return all GARD (2000) units, including the targeted one, to their respective indexed positions within the hold (5000), thereby ensuring that no GARD (2000) unit is extracted from the aircraft hold, unlike conventional ULD cargo practices where upstream containers must be offloaded from the aircraft to access specific baggage.

In another embodiment, the hold (5000) further comprises safety functions and fallback provisions. ConSys (8000) is configured to verify cargo door (5100) status, sill docking confirmation with CTB-A (4120), ETRA (4230), or CPL (4320), and positive restraint of each GARD (2000) by DPLG (5210) before authorizing any indexing step. Zone-clear sensors and encoder agreement between synchronized RODA (5220) roller lines are continuously monitored, with mismatches or obstructions triggering immediate fault stops. A distributed emergency-stop hierarchy is configured to give override priority to the sill interlocks and crew station inputs. In degraded operation, fallback mechanisms ensure continuity without compromising security or safety. If RODA (5220) fails, GARD (2000) units may be repositioned manually along integrated low-friction rails. If DPLG (5210) locks do not respond, override levers are provided to permit mechanical disengagement. SDTU (5300) is further configured with side-access provisions that enable manual removal of a single GARD (2000) at the sill (5100) using ground-handling equipment. Throughout fallback operation, identifiers embedded in each GARD (2000) preserve tracking, and ConSys (8000) is configured to log all deviations for post-event analysis. The technical effect is that no single failure in LOOP (5200), DPLG (5210), RODA (5220), SURM (5230), or SDTU (5300) can prevent safe unloading or retrieval of baggage (1100, 1200), ensuring compliance with fail-safe principles under CS-25 requirements.

The combined technical effects of the hold (5000) subsystems - LOOP (5200), DPLG (5210), RODA (5220), SURM (5230), and SDTU (5300) - establish a new functional role for the aircraft lower deck. Instead of serving solely as a static storage space with roller floors, including variants fitted with Power Drive Units (PDUs) that provide local drive assistance for ULD positioning, the hold (5000) is configured to operate as an active circulation platform that positions, secures, and retrieves GARD (2000) units under ConSys (8000) control. In contrast to conventional ULD systems, which depend on belt loaders, dollies, and limited PDU-driven motion, the disclosed architecture is configured to achieve stepwise indexing, selective retrieval, and sill-level integration without rehandling or manpower dependency.

The LOOP (5200) subsystem is designed to remain compatible with established aircraft structures and certification practices:
(i) Turnaround times are shortened by eliminating bulk stacking and re-stacking of baggage (1100, 1200) while preserving integration with current fuselage geometries.
(ii) Certification pathways are simplified, since restraint forces are embedded in DPLG (5210) and continuously verified by ConSys (8000) to meet CS-25 cargo load factors.
(iii) Loadmaster workload is reduced, as center-of-gravity (CG) compliance is dynamically maintained during each indexing step.
(iv) Digital traceability is inherent, with each indexing cycle, restraint confirmation, and baggage (1100, 1200) retrieval event logged into a unified dataset for airline and regulatory oversight.

The technical effect is that the hold (5000) outperforms and redefines the existing role of conventional passive storage, or even a PDU-assisted one on some aircraft types, into a fully automated, agile, and flexible process that functions as a digitally integrated, dynamic, and hassle-free element of the end-to-end baggage handling system (1000), while remaining fully compatible with existing aircraft design conventions. This enables operators to claim lower turnaround times, maintain higher safety margins, and secure future-ready cargo capabilities without compromising cabin or fuselage design.

### 5. Baggage Claim for Authenticated-Passenger (BACAP (7000))

Referring to Fig. 6, the system (1000) comprises a Baggage Claim for Authenticated-Passenger subsystem BACAP (7000). BACAP (7000) introduces a reclaim architecture configured to provide authenticated delivery, in contrast to conventional carousel-based delivery and unsupervised conveyor discharge. In conventional systems, baggage (1100, 1200) is offloaded, mainly manually, onto a rotating belt or conveyor surface. These conveyors deposit baggage (1100, 1200) items into a shared carousel-based reclaim area accessible to any passenger, without authentication-enabled passenger-baggage matching. By contrast, BACAP (7000) consists of scalable biometric baggage-claim gates (BIOBAG (7100)), defined by the present disclosure, that are arrival terminal-side security and release gates configured exclusively for automated baggage claim operations, ensuring passenger-specific authenticated delivery. The technical effect is to ensure traceable and individualized handover of baggage (1100, 1200), thereby completing the end-to-end authenticated-passenger handover chain.

In one embodiment, BACAP (7000) is positioned in the reclaim hall downstream of immigration checkpoints, thereby complying with regulated passenger flow. Its operation is orchestrated by ConSys (8000), which aligns baggage (1100, 1200) delivery timing with predicted passenger arrival. Synchronization begins when a passenger token (7110), defined by the present disclosure, comprises any uniquely associated passenger identifier, such as a digital flight booking reference, an RFID-enabled bracelet, a Near Field Communication (NFC)-enabled medium, biometric credential, or mobile/wearable device tag, all of which include passenger information (passenger ID, seat number, flight number, destinations, etc.). This token (7110) is configured to enable automated recognition of the passenger during reclaim sequencing. General detection processes are introduced here at upstream control points, such as PBB vestibule access points, bus doors, and bus gate-terminal entry points, consolidated at immigration passport/ID document reader gates to provide a dual-identification process. For transit passengers, equivalent identification is performed through Wi-Fi or RFID/NFC readers positioned at transit access points, enabling connection-based synchronization of baggage (1100, 1200) with onward flights. ConSys (8000) uses these progressive detections to forecast reclaim-hall arrival and to trigger Shuttle-A (3120) sequencing. This configuration eliminates manual handling and ensures deterministic, authentication-based sequencing of baggage (1100, 1200) delivery for all passengers.

In another embodiment, BACAP (7000) implements the core inventive inversion of the reclaim process: baggage (1100, 1200) is staged to wait for the passenger, instead of the passenger waiting for baggage (1100, 1200). Since GARD (2000) units within the system (1000), unlike conventional ULDs in existing operations, can be unloaded and transported along the transfer path from the aircraft to MOSUB-A (6120) significantly faster than passengers can progress through deboarding and immigration formalities, ConSys (8000) is configured to exploit this time differential to pre-stage baggage (1100, 1200) for authenticated-passenger claim. In one embodiment, ConSys (8000) further organizes the BACAP (7000) hall into flight-linked zones, assigning BACAP gates (7100) per flight, with sequencing events triggered by passenger proximity to ensure just-in-time presentation.

Passenger wayfinding and allocation are orchestrated by ConSys (8000) through multiple coordinated interfaces. In one embodiment, mobile or wearable devices provide personalized instructions such as: "Your baggage (1100, 1200) is ready at Gate 12 - Zone A." In another embodiment, digital signage at wayfinding points in the arrival corridors displays anonymized identifiers (e.g., seat numbers or token codes) mapped to gate (7100) allocations under ConSys (8000) control. In a further embodiment, illuminated floor pathways or dynamic lighting strips provide color-coded guidance to the correct zone. The technical effect is to ensure predictable routing from immigration exit to baggage retrieval, minimizing dwell time and reducing passenger stress.

In one embodiment, ConSys (8000) aggregates family-linked passenger tokens (7110) declared at check-in or booking and stages associated baggage (1100, 1200) at a single BACAP gate (7100) or across two adjacent gates, depending on quantity, thereby enabling coordinated baggage (1100, 1200) presentation at one location. Non-family groups such as sports teams or tour parties are processed individually while optionally co-located within the same BACAP (7000) zone under ConSys (8000) orchestration. The technical effect is to reduce redundant gate activations and optimize resource allocation within BACAP (7000) by staging baggage (1100, 1200) for linked tokens at common retrieval points, while still enforcing individualized authentication, thereby minimizing Shuttle-A (3120) dispatches and BIOBAG (7100) reset cycles.

In another embodiment, BACAP (7000) is configured to process passengers arriving from both contact stands served by a PBB and from remote stands served by buses. In this embodiment, detection is implemented as a specific case of the general processes introduced in [0061]: for PBB operations, token (7110) detection occurs at vestibule access points as passengers enter the terminal. For bus operations, token (7110) detection may occur both at bus embarkation points and at bus gate-terminal entry points, thereby maintaining continuous traceability of passengers from aircraft disembarkation to terminal entry. Passengers use their passive RFID, NFC, or wearable/mobile devices with optional Bluetooth or Wi-Fi presence detection to trigger BACAP (7000) functions. ConSys (8000) initiates pre-fetch logic, reserving candidate BIOBAG (7100) units and sequencing Shuttle-A (3120) tasks, thereby ensuring equivalent authenticated-passenger sequencing across both PBB-served and bus-served flights. The technical effect is to maintain authentication-based reclaim under heterogeneous arrival infrastructures, while ensuring uninterrupted traceability of passenger flow from aircraft exit to BIOBAG (7100) units.

BACAP (7000) is further configured to adapt its baggage (1100, 1200) presentation to variable passenger arrival conditions. Under ConSys (8000) supervision, BIOBAG (7100) units and release-time windows adjust dynamically to ensure that baggage (1100, 1200) is presented only when the corresponding passenger is ready to claim. The technical effect is to maintain just-in-time availability of baggage (1100, 1200) without congestion at the reclaim zone.

In one embodiment, each BIOBAG (7100) unit comprises the following interlocked subsystems:
(i) an entry door (7130) forming a secure interlock zone,
(ii) an interlock chamber dimensioned to admit a single passenger, physically separating entry and exit paths,
(iii) biometric sensors (7170) such as facial, iris, fingerprint, or equivalent biometric scanners,
(iv) an internal compartment within BIOBAG (7100) configured as a secure staging volume for baggage (1100, 1200), and
(v) a BIOBAG exit door (7150) configured for authenticated retrieval.

The authentication sequence requires dual inputs: token (7110) and biometric confirmation (7170). Release of baggage (1100, 1200) within BIOBAG (7100) is configured to occur only after both inputs are validated under ConSys (8000) supervision.

In one embodiment, BIOBAG (7100) is configured as a secure baggage-claim gate for authenticated retrieval. BIOBAG (7100) exit corridor is dimensioned to accommodate baggage (1100, 1200) and is scalable in width, depth, and height to adapt to terminal layouts and passenger-flow requirements. This corridor is designed and configured to comply with airport safety, security, and operational specifications and incorporates tamper-proof locks and safety barriers that isolate the compartment during loading. A trolley hold (7140) is structured at the exit end of BIOBAG (7100), within which stacks of trolleys (7121) are permanently housed in a vertically retractable configuration. Each trolley (7121) comprises a flat base deck and, in a preferred embodiment, a foldable handle designed to stow flush with the base for compact stacking. During a baggage (1100, 1200) transfer cycle, the uppermost trolley (7121) is elevated from the trolley hold (7140) into alignment with the BIOBAG (7100) floor level; after clearing, the next lower trolley (7121) is actuated upward from the trolley hold (7140) to prepare for the subsequent handling cycle. Each trolley (7121) is rated for up to three baggage items (1100, 1200) weighing up to 32 kg each, and incorporates torque-limited actuators, load sensors, and alignment guides to ensure correct placement. In another embodiment, trolley (7121) may include a motorized drive mechanism to assist passengers in handling loaded trolleys, reducing ergonomic stress and improving accessibility.

In one embodiment, BIOBAG (7100) is fully integrated with ConSys (8000) for coordinated sequencing, monitoring, and logging. One technical effect of this integration is that BIOBAG (7100) units are subject to centralized orchestration, ensuring secure, uninterrupted operation across the end-to-end baggage handling system (1000). Hence, BIOBAG (7100) units incorporate safety and adaptability features to ensure secure and continuous operation.

In one embodiment, hardware-level protections include emergency stop devices located inside and outside each BIOBAG (7100) unit, and interlocks that prevent actuation of doors (7130, 7150) or trolley mechanisms (7121) unless validation is complete. Fail-safe locks engage automatically upon authentication failure or power interruption, ensuring passenger safety and preventing unauthorized access. BIOBAG (7100) is scalable across airports of different sizes, from regional terminals with a limited number of gates to hub airports with multiple reclaim zones. In another embodiment, each BIOBAG (7100) may include a manual fallback hatch (7175), configured to allow authorized ground staff to manually provide a trolley (7121) during degraded modes when automatic trolley mechanisms are unavailable. The manual fallback hatch (7175) is secured by tamper-proof locks and is operated only under ConSys (8000) authorization, ensuring that security and authentication requirements remain satisfied even under degraded conditions through last-mile verification at the exit corridor-door (7160).

Technical effects of BACAP (7000): In contrast to conventional reclaim infrastructures that discharge all baggage (1100, 1200) collectively on shared carousels, BACAP (7000) implements a secure, passenger-specific reclaim architecture under ConSys (8000) supervision. The technical effects include:
(i) authenticated delivery, since every baggage (1100, 1200) item is released only after dual validation of token (7110) and biometric (7170) inputs, thereby preventing unauthorized retrieval and ensuring private, individualized reclaim through BIOBAG (7100) gates,
(ii) inversion of reclaim timing, as baggage (1100, 1200) is staged to wait for the verified passenger, enabled by the faster unloading and routing of GARD (2000) compared with passenger deboarding and immigration flow, thus reducing reclaim waiting times to near zero,
(iii) continuous digital traceability and accountability of all baggage (1100, 1200) handovers under ConSys (8000) supervisory, maintaining a complete log, from check-in to final claim,
(iv) reduction of reclaim-hall footprint through scalable gate-based layouts that eliminate the wide circulation areas required by carousel systems, and
(v) infrastructure neutrality, enabling deployment across airports of varying size and configuration, whether PBB-served or bus-served, without reliance on conveyor-based reclaim halls.

In combination, the technical effects of BACAP (7000) contribute to transforming conventional baggage-reclaim operations into an intelligent, passenger-authenticated reclaim subsystem, replacing manual supervision with condition-based automation. The integration of BIOBAG (7100), ConSys (8000), and GARD (2000) enables real-time verification of passenger identity, baggage identity, and GARD (2000) status, authorizing BIOBAG (7100) to release baggage (1100, 1200) only under synchronized, validated conditions. This architecture achieves a measurable reduction in reclaim latency, eliminates unauthorized access, and ensures full traceability within the end-to-end automated baggage-handling system (1000).

### 6. Automated Baggage Orientation and Positioning

As introduced in [0024b], the system (1000) includes baggage (1100, 1200) items managed throughout the end-to-end handling process. The invention is designed to ensure the secure tracking, traceable movement, and authenticated delivery of each baggage (1100, 1200) item to its rightful passenger. In conventional airport systems, baggage tracking depends primarily on tag identifiers and reconciliation databases, which provide only indirect confirmation. The present disclosure advances this principle by defining each baggage (1100, 1200) as a discrete and individually authenticated entity maintained under continuous traceability from check-in to reclaim. To achieve this, each baggage (1100, 1200) is equipped with a Portable Item Locator and Orientation Tag (PILOT (1110)), defined by the present disclosure, which provides mandatory identification, orientation referencing, and verification assistance.

Each baggage (1100, 1200) may also carry an IATA-standard baggage tag with a barcode and optional RFID capability for identification needs. The PILOT (1110), however, includes these features and extends functionality by adding orientation assurance alongside identification. It may be realized using RFID, UWB, NFC, Bluetooth Low Energy (BLE), optical scanning, or equivalent identification technologies. BIOBAG (7100) and other subsystem interfaces verify PILOT (1110) through their authentication sensors, regardless of the specific underlying technology. ConSys (8000) maintains a database linking each baggage (1100, 1200) and its PILOT (1110) identifier to the passenger's token (7110), seat number, and current traceability state. The passenger's token (7110) is a digital identifier assigned to each passenger and linked to their flight record, serving as the anchor for matching between passenger and baggage (1100, 1200).

Baggage (1100, 1200) is loaded into GARD (2000) under orientation rules designed to maximize PILOT (1110) readability while preserving throughput efficiency. In one embodiment, baggage (1100, 1200) is positioned so that the PILOT (1110) faces the front face of the GARD (2000), ensuring consistent line-of-sight for scanning at Shuttle-D (3110) in MOSUB-D (6110) or Shuttle-A (3120) in MOSUB-A (6120). Where baggage (1100, 1200) geometry prevents ideal orientation, Shuttle-D (3110) or Shuttle-A (3120) adjusts placement to the closest achievable configuration.

In one embodiment, the PILOT (1110) could be provided as the only adhesive label, replacing the conventional barcode-RFID stripes currently used, and applied at check-in by the passenger or airline agent, as PILOT (1110) embeds complete passenger-journey identifiers. This embodiment would be the only one implemented for sustainability reasons, thereby simplifying the identification process while reducing material use. PILOT (1110) is designed to withstand all environmental conditions encountered in ground and flight operations and may be configured with tamper-evident features, such as embedded detection circuits or equivalent structures, which trigger alerts if the tag is detached, cut, or otherwise interfered with. These provisions ensure that baggage (1100, 1200) remains protected against unauthorized removal or mishandling, while complementing the durability and orientation functions.

In another embodiment, reusable PILOT (1110) tags could be supplied at airports for passengers who require fixed tags for multiple flights, where these tags are programmable for future use. In yet another embodiment, the PILOT (1110) could be integrated into baggage shells by baggage manufacturers at the correct position of orientation when this technology is admitted by aviation authorities such as IATA or ICAO; that is, at check-in points, all that is needed is to insert complete passenger-journey identifiers into this embedded smart tag, ensuring permanent orientation and identification capability, and time-efficient and seamless baggage handling. The technical effect is to reduce material waste, increase sustainability, and enhance the long-term reliability of baggage (1100, 1200) identification and orientation.

Traceability integrity is enforced at every subsystem interface. When baggage (1100, 1200) is loaded into a GARD (2000), the GARD ID (2600) is logged against all associated PILOT (1110) identifiers, creating a rack-to-item mapping. When staged at MOSUB-D (6110), the total mass of each GARD (2000) is measured by integrated load cells to support and verify aircraft weight-and-balance calculations. These readings are cross-checked against the aggregate baggage weights declared at check-in, providing an additional safety layer. When the GARD (2000) transfers via CTROB (4100) or CTROS (4200) into LOOP (5200), the traceability chain continues seamlessly through the aircraft hold (5000) and onward to MOSUB-A (6120) for arrival processing. The tracking log is continuously updated with timestamps and confirmations at each transition, ensuring that ConSys (8000) maintains a real-time traceability record. At reclaim, BIOBAG (7100) performs dual validation by confirming the passenger's token (7110) and cross-checking the associated PILOT (1110) through its authentication sensors, irrespective of the technology used.

In one embodiment, non-standard baggage (1200) is accommodated in dedicated GARD (2000) units as defined in [0030a] and is also equipped with PILOT (1110) identifiers. These identifiers are affixed in orientations adapted to the specific geometry of the item, ensuring continuous machine readability even when interior rows are not embedded or when internal configurations differ from those of the standard GARD (2000). ConSys (8000) maintains an uninterrupted linkage between each non-standard baggage item (1200), its passenger token (7110), and its hosting GARD (2000) unit, thereby ensuring that non-standard baggage (1200) follows the same authentication, validation, and sequencing processes as standard baggage (1100), while preserving system-wide traceability and uniform reclaim logic at BACAP (7000).

Fallback provisions and system-wide security enforcement functions, including exit verification, misrouting, delayed baggage (1100, 1200) handling, customs inspection, and BACAP (7000) error recovery, are orchestrated by ConSys (8000). These operational functions are described in detail in Section 7 of the present disclosure, in which ConSys (8000) is defined as the supervisory control system of the invention.

The technical effect of PILOT (1110) is to standardize the orientation, traceability, and passenger linkage of each baggage (1100, 1200) item. By embedding orientation and positioning data within PILOT (1110), each baggage item is automatically aligned and placed inside GARD (2000) to utilize interior row space with maximum efficiency, allowing the maximum number of baggage items to be accommodated per GARD unit. This standardization ensures consistent readability across all subsystems, eliminates misalignment risks during automated handling, and maintains traceability integrity from departure to arrival. It prevents baggage loss, theft, or misrouting, reduces manual intervention, and enables seamless interoperability with GARD (2000), MOSUB (6100), CTROB (4100), CTROS (4200), LOOP (5200), and BACAP (7000). Collectively, these functions establish baggage (1100, 1200) as a fully authenticated object within the system (1000), completing the foundation for automation-dependent, authenticated-passenger delivery.

### 7. Central Control System (ConSys (8000)) Orchestration

### Stage 1 - Departure AirOps:

ConSys Role and Architecture. Referring to Fig. 7a, ConSys (8000) is the supervisory orchestration framework of the fully automated end-to-end baggage handling system (1000). ConSys (8000) coordinates baggage (1100, 1200), GARD (2000), MOSUB (6100), Shuttle (3100), AMR/AGV (3200), transfer infrastructures CTROB (4100), CTROS (4200), and GEP (4300), including GADOT (4310)/CPL (4320), LOOP (5200), BACAP (7000), together with all interconnected modules, components, and interfaces. ConSys (8000) maintains a continuously updated inventory record that links every baggage (1100, 1200) via its PILOT (1110) tag to the passenger token (7110) and to its hosting GARD (2000) that interacts with ConSys (8000) to provide its current process state and location. ConSys (8000) supervises all subsystem tasks, which are further detailed herein under their respective stage-related operations. It issues movement authorizations to enable fully automated interactions between subsystems, enforces interlocks, verifies operational readiness, and continuously logs every event for traceability, control, and task execution, while providing predictive-maintenance oversight across the system lifecycle.

Baggage Admission and Association. ConSys (8000), beginning from the check-in process, receives per-item and aggregate inputs of the flight-passenger data, including identity, flight number, seat number, and weight readings, amongst others. At departure check-in, passengers or agents are guided by pick-to-light indicators or equivalent orientation aids to affix the PILOT (1110) tag consistently on one side of the baggage (1100, 1200), preferably on baggage items with a front-to-rear measure not exceeding about 350 mm in accordance with IATA baggage XL class dimensions, ensuring optimal leverage of GARD (2000) row width. After baggage screening is accomplished, and during automated baggage loading at the MOSUB-D (6110) zone, Shuttle-D (3110) picks up each baggage (1100, 1200) after scanning its PILOT (1110). Shuttle-D (3110) then ensures that baggage (1100, 1200) is placed in the appropriate GARD (2000) row in a configured way to leverage the row width efficiently, accommodate the maximum number of baggage items per row, and align the PILOT (1110) tag toward the shutter door (2200) for subsequent automated scanning and retrieval. When baggage (1100, 1200) is placed into a GARD (2000), ConSys (8000) finalizes a rack-to-item association using the GARD ID (2600) and records the row-level distribution of baggage (1100, 1200) inside the GARD (2000) to support center-of-gravity (CG) calculations. ConSys (8000) simultaneously verifies that retention devices (2300) are engaged, then shutters (2200) are closed, ensuring environmental protection and load restraint. Once these validations are successful, ConSys (8000) authorizes admission of the fully loaded GARD (2000) into the departure queue. The GARD (2000), with its full load, is then weighed in preparation for transportation to the aircraft via transfer infrastructures (4000). The technical effect is a deterministic and auditable progression from person-level identity to rack-level inventory, eliminating ambiguity before apron transfer.

Sequencing and release from MOSUB-D: Once GARD (2000) units are weighed and their row-level weight distribution verified against the computed CG trajectory for each unit, and ConSys (8000) confirms that their weights are compatible with the designated aircraft type by mapping planned GARD (2000) locations within the cargo hold (5000), the units are admitted into the departure queue. ConSys (8000) then applies sequencing logic to control their release from MOSUB-D (6110). Each GARD (2000) is dispatched in the order prescribed by the aircraft load plan, ensuring that center-of-gravity (CG) limits and access priorities are respected throughout the loading process. ConSys (8000) evaluates readiness at multiple levels before authorizing release: the GARD ID (2600) is confirmed against the flight manifest, the total weight of GARD (2000) units is verified within the allowable aircraft limitations, and the receiving transfer infrastructure (CTROB (4100), CTROS (4200), or GADOT (4310)) is confirmed to be aligned and available. When all conditions are satisfied, ConSys (8000) authorizes a coordinated fleet of AMR/AGV (3200) units, operating in parallel under swarm logic, to collect GARD (2000) units from MOSUB-D (6110) and advance them toward the selected transfer infrastructures. In this way, ConSys (8000) transforms MOSUB-D (6110) from a passive staging area into an active sequencing buffer, releasing each GARD (2000) deterministically, one by one, in accordance with CG-safe progression and downstream system readiness. The technical effect is that baggage (1100, 1200) flow proceeds in a controlled, traceable sequence that anticipates aircraft balance requirements while preventing congestion at apron transfer points.

Fallback and security in Stage 1: If any validation step fails at MOSUB-D (6110), ConSys (8000) initiates automatic quarantine of the affected GARD (2000). For any such event, a GARD (2000) may be held in place if its total mass falls outside tolerance, if its internal distribution differs from expected values, or if its identifier (2600) does not match the manifest. The quarantined unit is flagged in the system log and removed from the departure queue by its assigned AMR/AGV (3200) for recheck or customs inspection. In degraded operation, manual fallback options are provided: shutters (2200) and retention devices (2300) may be actuated by mechanical cranks or quick-release mechanisms. For fully loaded GARD (2000) units where shutters (2200) or retention devices (2300) fail to open or fully close, ConSys (8000) issues orders to Shuttle-D (3110) to transfer baggage (1100, 1200) items from the failed GARD (2000) into another empty GARD (2000) available at MOSUB-D (6110). The failed unit is then extracted from the MOSUB-D (6110) zone for repair. ConSys (8000) records every fallback event, including timestamps, operator actions, and subsystem states, ensuring that the baggage (1100, 1200) inventory remains intact even under non-standard conditions. Late-arriving baggage (1100, 1200) is routed to a designated late-bag GARD (2000) within MOSUB-D (6110), where it can be weighed and validated separately before being merged into the load sequence without disrupting the main queue. The technical effect is that operational errors, delays, or subsystem faults in Stage 1 do not propagate forward into apron transfer, as ConSys (8000) enforces containment, correction, and traceable recovery at the earliest opportunity.

### Stage 2 - Apron AirOps:

Transfer dispatch and apron entry. Referring to Fig. 7b, once GARD (2000) units are validated at MOSUB-D (6110), ConSys (8000) authorizes their release for apron transfer. Each GARD (2000) is admitted into the departure queue only after ConSys (8000) confirms that its identifier (2600) matches the manifest, that weight and row distribution align with the aircraft load plan, and that the receiving infrastructure is ready. At this stage, ConSys (8000) also ensures that each GARD (2000) is pre-mapped to its designated indexed position inside LOOP (5200), so that apron dispatch directly supports the pre-calculated cargo-hold (5000) configuration. When all conditions are satisfied, ConSys (8000) authorizes a swarm of AMR/AGV (3200) units to collect the validated GARD (2000) from MOSUB-D (6110) and transfer it toward the designated apron infrastructure. The technical effect is that apron transfer begins only under ConSys (8000) confirmation of baggage (1100, 1200) identity, aircraft compatibility, and infrastructure readiness, thereby preventing congestion and ensuring deterministic flow from terminal staging to apron systems. This marks the transition from terminal-side handling (Stage 1) to apron-side automated transfer (Stage 2), ensuring uninterrupted flow continuity under ConSys (8000) orchestration.

Apron transfer sequencing. ConSys (8000) applies sequencing logic to balance the dispatch of GARD (2000) units across available apron-transfer infrastructures. For any given PBB-served stand, at least one of CTROB (4100) or CTROS (4200) is mandatory to achieve full end-to-end automation in Stage 2 apron operations, while GEP (4300) with GADOT (4310) operates as backup infrastructure and as the standard pathway for remote stands. ConSys (8000) supervises the dispatch order, coordinating AMR/AGV (3200) movements so that apron infrastructures remain continuously fed but never congested. Transit baggage (1100, 1200) is sequenced last into LOOP (5200) by design, ensuring near-door accessibility for minimum-connection-time requirements. The technical effect is a balanced, congestion-free apron-transfer sequence that anticipates aircraft-balance requirements and maintains access priorities for transit baggage (1100, 1200).

LOOP capacities and operations. When a GARD (2000) reaches the aircraft sill (5100), ConSys (8000) supervises its insertion into LOOP (5200). SDTU (5300) aligns the GARD (2000) at the sill and moves it into the indexed slot defined by the load plan. LOOP (5200), under ConSys (8000) control, activates RODA (5220) rollers in a controlled, stepwise manner, then triggers DPLG (5210) locks. Once DPLG (5210) locks secure the first GARD (2000) unit, subsequent units are admitted sequentially under ConSys (8000) authorization, advancing along the LOOP (5200) path without manual handling until the last GARD (2000) is loaded and locked. For additional flexibility, one sill-adjacent slot may be intentionally left empty during loading and kept empty either for the entire flight or only during the loading phase, to facilitate handling of flagged-baggage or maintenance events.

The technical effect is a deterministic, automated loading process in which every GARD (2000) unit is indexed to its planned position for normal sequencing, ensuring balanced aircraft loading, traceability, and optimized turnaround efficiency.

SURM-assisted flagged-baggage retrieval and clearance generation. In the event of a flagged baggage (1100, 1200)-for instance, due to a passenger no-show or security alert-ConSys (8000) triggers SURM (5230) to initiate the retrieval process within LOOP (5200). Under ConSys (8000) command, SURM (5230) instructs DPLG (5210) to unlock simultaneously across both LOOP (5200) lanes and commands RODA (5220) to displace all GARD (2000) units rearward by about one meter, thereby creating temporary clearance near the cargo partition wall. This clearance allows lane transitions and rotation of GARD (2000) units by RODA (5220), enabling access to the targeted GARD (2000) without extracting other units from the aircraft.

ConSys (8000) then commands RODA (5220) to resume circular indexing by one standardized pitch length Δ, preserving the circulation of LOOP (5200) while the targeted GARD (2000) is maneuvered to the sill (5100). Once at the sill, SDTU (5300) engages sill-side power, confirms that the sill door (5100) is open and interlocked, and energizes the targeted GARD (2000). ConSys (8000) then commands successive actuation of shutters (2200) and retention devices (2300): the shutter (2200) opens first, followed by disengagement of the retention device (2300) for the row containing the flagged baggage (1100, 1200).

A dedicated sill-side AMR/AGV (3200) advances under ConSys (8000) command, verifies the flagged baggage (1100, 1200) via PILOT (1110), and extracts it. The baggage (1100, 1200) is then routed via CTROB (4100), CTROS (4200), or CPL (4320) to inspection, recheck, customs, or final reclaim as applicable. Once extraction is complete, ConSys (8000) commands the retention device (2300) to re-engage first, followed by closure of the shutter (2200).

After retrieval, ConSys (8000) orders RODA (5220) to reverse the flow, returning each GARD (2000) unit to its mapped indexed location within the cargo hold (5000). ConSys (8000) then triggers SURM (5230) to push both LOOP (5200) lanes forward toward the cargo partition wall, thereby restoring all GARD (2000) units to their indexed positions. Once repositioning is complete, ConSys (8000) commands DPLG (5210) to re-engage and lock the GARD (2000) units in place. ConSys (8000) then simultaneously updates the baggage (1100, 1200) inventory record, recalculates the aircraft center of gravity based on the updated GARD (2000) contents, and logs all related actions, including timestamps, subsystem states, and operator interventions.

The technical effect is a SURM-assisted reversible retrieval process in which any GARD (2000), regardless of its indexed position, can be realigned, rotated, and delivered to sill (5100) without unloading other GARD (2000) units from the aircraft. This eliminates bulk re-handling, preserves turnaround efficiency, and ensures restraint compliance, traceability, and center-of-gravity control, while enabling SURM (5230) to function as both a clearance-generating and alignment-assisting subsystem.

Apron fallbacks and infrastructure continuity. At CTROB (4100) or CTROS (4200) entry points, if ConSys (8000) detects a GARD (2000) malfunction that affects its operability or compatibility with the aircraft operational envelope, a quarantine action is immediately initiated. The affected GARD (2000) is extracted and rerouted back to MOSUB-D (6110) by its assigned AMR/AGV (3200) for recheck or replacement. At MOSUB-D (6110), a spare buffer of empty GARD (2000) units is always maintained in case substitution is required.

Within CTROB (4100) or CTROS (4200), any malfunction during transfer triggers an immediate halt. ConSys (8000) then applies certified contingency protocols, which may include rerouting subsequent units to the alternative main transfer infrastructure (CTROB (4100) to CTROS (4200), or vice versa), diverting units to the backup infrastructure (GEP (4300)/GADOT (4310)), or, as a last resort, authorizing manual extraction via CTROB (4100) or CTROS (4200) side-access platforms, where such contingency paths are available by design. When a fault in GADOT (4310) or CPL (4320) is detected, ConSys (8000) activates a degraded mode. During this mode, the personnel assigned to monitor GADOT (4310) operations may intervene to perform supervised manual control-if GADOT (4310) normally operates autonomously-while the affected operations remain under geo-fenced supervision and ConSys (8000) oversight.

The technical effect is that no single point of failure in apron transfer halts the baggage (1100, 1200) flow, as ConSys (8000) enforces quarantining, substitution, rerouting, degraded-mode operation, and manual fallback within a controlled and fully traceable framework.

Combined technical effect of Stage 2. Stage 2 apron operations, orchestrated by ConSys (8000), transform the transition of baggage (1100, 1200) from terminal staging into the aircraft hold (5000) into a continuous, automation-controlled, and self-verified sequence. By authorizing dispatch from MOSUB-D (6110) only after validation, mapping each GARD (2000) to a pre-programmed LOOP (5200) slot, sequencing flows across CTROB (4100), CTROS (4200), and GEP (4300)/GADOT (4310), enabling deterministic indexing within LOOP (5200), and enforcing fallbacks or degraded modes where required, ConSys (8000) ensures that apron operations proceed without manual intervention, unscheduled delays, or uncontrolled congestion.

The combined technical effect is that baggage (1100, 1200) transfer during Stage 2 evolves from fragmented, labor-intensive ground handling into an uninterrupted, traceable, and CG-compliant process. Unlike conventional apron practices-where belt loaders, dollies, and manual sequencing often cause bottlenecks and safety risks-the disclosed system guarantees continuous traceability, predictable cycle times, minimized personnel exposure on the apron, and the unique capability to retrieve flagged baggage (1100, 1200) without offloading any GARD (2000) unit outside the aircraft, while maintaining full in-hold circulation of all other units.

Accordingly, the disclosed subsystem ensures that all GARD (2000) units remain within the aircraft and are not removed from the cargo hold (5000), unlike conventional ULD-based cargo systems, where upstream containers must be offloaded from the aircraft to access specific baggage under similar operational circumstances. This redefines apron operations as a secure, resilient, and automation-enforced stage of the end-to-end baggage-handling system (1000).

### Stage 3 - Arrival AirOps:

Arrival reception at aircraft sill. Referring to Fig. 7c, upon arrival, ConSys (8000) supervises the reverse operation of LOOP (5200). After the cargo door is opened and the sill (5100) interlocks are verified, DPLG (5210) locks sequentially release, and RODA (5220) rollers advance GARD (2000) units stepwise toward the sill (5100). The sequencing is executed in accordance with aircraft center-of-gravity (CG) management requirements, ensuring that the unloading order maintains dynamic balance until all GARD (2000) units are offloaded from the cargo hold (5000).

Each sill transfer is executed under SDTU (5300) powered alignment, interfacing with CTROB (4100), CTROS (4200), or CPL (4320). Each interface performs a cross-check between the GARD ID (2600) and inbound manifest data, verifying payload integrity, shutter (2200) status, and retention-device (2300) engagement before release. If any discrepancy is detected, ConSys (8000) immediately quarantines the affected GARD (2000) at the terminal-side entry or exit points-CTB-T (4110), CTS-T (4210), or GEP (4300)-for customs, technical, or security inspection, thereby preserving the uninterrupted flow of subsequent GARD (2000) units.

At this stage, ConSys (8000) records each interface's data, transfer timestamps, and GARD IDs (2600) to maintain continuous and verifiable traceability for downstream BACAP (7000) processing.

MOSUB-A (6120) admission. In reverse flow at arrival terminals, AMR/AGV (3200) units collect GARD (2000) from CTB-T (4110), CTS-T (4210), or GEP (4300) and convey them into MOSUB-A (6120). ConSys (8000) compares the departure baggage dataset with the inbound manifest to confirm that no tampering or substitution occurred during the flight. This verification is performed through the GARD ID (2600), which provides telemetry of row-level content to ConSys (8000) as a double confirmation of consistency with preflight data.

Any misidentified or inconsistent GARD (2000) units are quarantined within a dedicated MOSUB-A (6120) bay. ConSys (8000) supervises these quarantine and fallback procedures, ensuring that compliant GARD (2000) units continue seamlessly into the Shuttle-A (3120) unloading zones.

The technical effect is the transformation of MOSUB-A (6120) into a secure inbound validation buffer where processing is deterministic, preventing baggage (1100, 1200) leakage or substitution before reclaim. Validated MOSUB-A (6120) data-including baggage (1100, 1200) counts, telemetry confirmation, and verification status-is transmitted to BACAP (7000) under ConSys (8000) control, ensuring that downstream sequencing operates exclusively on cleared baggage (1100, 1200) flows.

Shuttle-A (3120) unloading operations. Upon arrival, ConSys (8000) supervises the processing of baggage (1100, 1200) in synchrony with passenger debarkation. Across passenger movements from upstream points-PBB vestibule exits and bus-gate entries-, the token (7110) tracking begins and continues through passport-control checkpoints, updating ConSys (8000) to forecast each passenger's arrival at baggage-reclaim zones.

Based on this forecast, Shuttle-A (3120) sequencing is prepared so that baggage (1100, 1200) is pre-ordered according to passenger arrival order; however, unloading does not proceed until ConSys (8000) confirms that the passenger has entered the BACAP (7000) zone. At that point, flight number, seat number, baggage (1100, 1200) count, tag identifiers, and the assigned BIOBAG (7100) gate are displayed on the BACAP (7000) annunciator panel. Shuttle-A (3120) units are then triggered to extract the corresponding passenger's baggage (1100, 1200) from the designated GARD (2000) and deliver it directly to the trolley (7121) at the assigned BIOBAG (7100) gate.

The technical effect is that Shuttle-A (3120) operations provide deterministic, parallelized unloading synchronized with passenger progression, ensuring that baggage (1100, 1200) becomes available precisely when the passenger enters the BACAP (7000) zone. This eliminates intermediate buffer areas, prevents reclaim congestion, and inverts the reclaim logic so that baggage (1100, 1200) waits for the passenger-rather than the passenger waiting for baggage.

BACAP (7000) sequencing and BIOBAG (7100) allocation. At the sequencing stage, ConSys (8000) directs baggage (1100, 1200) from Shuttle-A (3120) unloading directly into BIOBAG (7100) staging lanes. Sequencing is synchronized with passenger progression so that baggage (1100, 1200) is pre-allocated to a specific BIOBAG (7100) gate before the passenger reaches the reclaim zone. Flight number, seat number, baggage (1100, 1200) count, tag identifiers, and the assigned BIOBAG (7100) gate are simultaneously displayed on digital annunciator panels under ConSys (8000) supervision, providing each passenger with clear reclaim guidance.

In one embodiment, specific BIOBAG (7100) zones are dedicated to non-standard baggage (1200). These zones incorporate enlarged staging compartments, adaptive trolley systems, and reinforced delivery platforms, enabling safe transfer of oversized or irregularly shaped items while preserving the same dual-validation and traceability logic applied to standard baggage (1100). ConSys (8000) ensures that gate allocation and annunciator guidance are dynamically updated in real time to reflect passenger-flow conditions, thereby preventing congestion and misrouting.

The technical effect is that BACAP (7000) enables deterministic sequencing and real-time allocation of all baggage (1100, 1200), while BIOBAG (7100) replaces conventional carousels with individualized, passenger-authenticated reclaim portals. The annunciator-guided allocation step provides passengers with advance notice of reclaim location, ensuring predictable routing, synchronized readiness, and fully automated end-to-end reclaim.

Passenger authentication and automated trolley delivery. Once the passenger reaches the assigned BIOBAG (7100) gate displayed on the annunciator panel, ConSys (8000) supervises the entire gate cycle. The BIOBAG (7100) entry door (7130) admits the passenger into a secure validation area, where token (7110) and biometric (7170) authentication are performed. Once ConSys (8000) verifies both credentials and confirms operational safety, it authorizes the baggage release sequence.

Upon authorization, the automated trolley system (7121) is actuated. Trolleys (7121) stored within the vertically retractable trolley hold (7140) elevate, align with the staging platform, and extend toward the exit door (7150) to complete the handover path. The passenger's baggage (1100, 1200) is pre-staged on the trolley (7121) prior to passenger handling.

ConSys (8000) monitors actuator feedback, identification and tracking signals-including RFID, UWB, NFC, or equivalent technologies-and door states throughout the handover, logging all validation results, sensor events, and timestamps in an auditable record. After the passenger retrieves their baggage (1100, 1200), the next in-queue trolley (7121) is automatically indexed for the subsequent loading cycle, while the used trolley is re-stacked at designated arrival-terminal collection zones for re-deployment.

The technical effect is that passenger reclaim is transformed into an individualized, authenticated, and trolley-automated process, with ConSys (8000) ensuring secure validation, precise delivery, and continuous monitoring throughout each reclaim cycle.

Family, group, and transit handling. ConSys (8000) orchestrates family, group, and transit flows by dynamically aggregating linked passenger tokens (7110) declared at booking or check-in. For family-linked passengers, associated baggage (1100, 1200) is staged at a single or adjacent BIOBAG (7100) gates. In cases where all family baggage (1100, 1200) items can be delivered at one gate-assuming a maximum of three baggage (1100, 1200) items per family member-ConSys (8000) sequences multiple trolleys (7121) from the same or two adjacent BIOBAG (7100) gates to deliver all items in rapid, parallel cycles, while each family member still undergoes individualized token (7110) and biometric (7170) validation.

For non-family groups, such as sports teams or tour parties, passengers are co-located within the same BACAP (7000) zone but distributed across a defined series of BIOBAG (7100) gate numbers to gather the group within one operational area. ConSys (8000) regulates cadence and trolley dispatch sequencing to avoid congestion while preserving per-passenger authentication and reclaim privacy.

For transit passengers, and prior to aircraft arrival, ConSys (8000) pre-sequences and aligns transit baggage (1100, 1200) with the schedules of their connecting flights. Upon arrival at the transit airport, ConSys (8000) reroutes baggage (1100, 1200) directly into MOSUB-D (6110) transfer buffers, thereby eliminating unnecessary reclaim-hall entry. Shuttle-D (3110) units allocate each transit passenger's baggage (1100, 1200) to the appropriate GARD (2000) units within MOSUB-D (6110), following the priority of connection times for onward flights.

The technical effect is that families, groups, and transit flows are handled seamlessly under unified orchestration, with ConSys (8000) ensuring optimized gate allocation, balanced trolley sequencing, and consistent authentication integrity, while also guaranteeing timely alignment of transit passengers and their baggage (1100, 1200) for on-schedule loading onto connecting flights.

Fallback and degraded operations. ConSys (8000) continuously monitors subsystem health, including BIOBAG (7100) gates, the trolley (7121) subsystem, MOSUB (6100) zones, communication links, and all associated devices and components. If a fault or anomaly is detected, ConSys (8000) immediately transitions the affected subsystem into a controlled degraded-operation state while maintaining authentication and safety enforcement.

In one embodiment, if trolley (7121) automation partially fails, ConSys (8000) automatically reassigns the passenger's baggage (1100, 1200) to the first available BIOBAG (7100) gate and initiates its transfer. The passenger is simultaneously notified through the annunciator display to proceed to the newly assigned BIOBAG (7100) gate for retrieval.

If the trolley (7121) subsystem becomes fully inoperative, a secure fallback hatch (7175) enables authorized personnel to provide a manual trolley; however, release remains under ConSys (8000) control and is permitted only after successful token (7110) and biometric (7170) validation.

In another embodiment, if BACAP (7000) erroneously assigns baggage (1100, 1200) to the wrong passenger, ConSys (8000) enforces last-mile interception at the BACAP (7000) exit corridor-door (7160). This door (7160) remains locked, preventing the passenger from leaving the BACAP (7000) zone with mismatched baggage (1100, 1200). ConSys (8000) triggers an alert, quarantines the affected baggage (1100, 1200), and reassigns the passenger to the correct baggage item, ensuring that no unauthorized removal occurs. The wrongly delivered baggage (1100, 1200) is collected by security personnel and loaded onto a dedicated AMR/AGV (3200), which returns the flagged baggage (1100, 1200) to the MOSUB-A (6120) zone for reinsertion into its original GARD (2000) unit, enabling corrected delivery to the rightful passenger.

In a further embodiment, during temporary network interruptions, ConSys (8000) delegates short-term autonomy to individual BIOBAG (7100) gate controllers preloaded with passenger and baggage (1100, 1200) datasets, while continuing to log all actions for reconciliation upon reconnection.

The technical effect is uninterrupted, secure reclaim continuity, with ConSys (8000) ensuring safe fallback sequencing, authentication integrity, last-mile interception at the BACAP (7000) exit corridor-door (7160), and auditable recovery records, thereby maintaining reliable and traceable operations even under degraded or fault conditions.

Combined technical effect of Stage 3. Stage 3 establishes a reclaim architecture in which ConSys (8000) functions as the supervisory authority across unloading, sequencing, passenger allocation, gate operation, and final delivery within BACAP (7000). Under this orchestration, every subsystem-from Shuttle-A (3120) and MOSUB-A (6120) to BIOBAG (7100) and the trolley subsystem (7140/7121)-operates deterministically and in synchronization with passenger progression.

The technical effects include:
(i) inversion of reclaim timing, as baggage (1100, 1200) is staged to wait for passengers under ConSys (8000) scheduling, thereby eliminating traditional waiting times and congestion in the reclaim hall;
(ii) replacement of carousels with individualized BIOBAG (7100) gates, whose interlock, trolley (7121) actuation, and release operations are continuously commanded and logged by ConSys (8000);
(iii) secure, contact-free delivery through automated trolleys (7121), ensuring ergonomic and authenticated handover directly to each passenger under ConSys (8000) validation;
(iv) uniform handling logic for standard and non-standard baggage (1100, 1200) within a single automated orchestration framework, without requiring separate reclaim infrastructures;
(v) optimized coordination of family, group, and transit flows through ConSys (8000) aggregation logic, cadence control, and dynamic gate allocation synchronized with MOSUB-D (6130) sequencing for connecting flights;
(vi) resilience through fallback and degraded modes, including trolley reassignment, fallback hatches (7175), temporary local-gate autonomy, and last-mile lockout at the BACAP (7000) exit corridor-door (7160), all supervised by ConSys (8000) to preserve operational continuity; and
(vii) full end-to-end traceability, as ConSys (8000) maintains a unified digital record of interlocks, validations, sensor feedback, and passenger interactions from the aircraft sill (5100) to final reclaim.

The combined technical effect is that Stage 3 transforms the baggage (1100, 1200) reclaim process from a non-authenticated, carousel-based operation into a secure, individualized, and automation-enforced handover environment. ConSys (8000) completes the end-to-end automation loop by synchronizing passenger tokens (7110), PILOT (1110) identifiers, GARD (2000) units, and trolley subsystem (7140/7121) operations under a single digital control layer. This architecture ensures that every baggage (1100, 1200) item is securely staged and released only to its authenticated passenger, eliminating misdelivery and dwell times, while maintaining traceable, auditable, and resilient reclaim operations throughout the final stage of the system (1000).

### LIST OF REFERENCE NUMERALS

| Reference Numeral | Acronym / Short Name | Full Name / Description |
|---|---|---|
| (1000) | System | End-to-End Automated Baggage Handling System |
| (1100) | Baggage | Standard Baggage (IATA-Compliant) |
| (1200) | Baggage | Non-Standard Baggage (Out-of-Gauge Items) |
| (1100, 1200) | Baggage (1100, 1200) | Combined Term for Standard and Non-Standard Baggage |
| (1110) | PILOT | Portable Item Locator and Orientation Tag |
| (2000) | GARD | Ground-Air Rack Device |
| (2200) | Shutters | Shutter Doors of GARD |
| (2300) | Retention Devices | Retractable Straps or Hinged Bars of GARD |
| (2400) | Storage Rows | Interior Storage Rows of GARD |
| (2500) | Base Frame | Structural Base Frame of GARD |
| (2600) | GARD ID | GARD Identifier and Telemetry Module |
| (2700) | ETBF | Extended Tapered Base Frame |
| (3000) | Vehicles | Motive Transport Vehicles (General AMR/AGV Class) |
| (3100) | Shuttle | Robo-Shuttle Unit |
| (3110) | Shuttle-D | Departure Robo-Shuttle Unit |
| (3120) | Shuttle-A | Arrival Robo-Shuttle Unit |
| (3200) | AMR/AGV | Autonomous Mobile Robot / Automated Guided Vehicle |
| (4000) | Transfer Infrastructure | Terminal-Aircraft Transfer Infrastructures (General) |
| (4100) | CTROB | Cargo Travelator-Operated Bridge |
| (4101) | BEL | Base-Edge Lock |
| (4110) | CTB-T | Terminal-Side Bridge Module |
| (4120) | CTB-A | Aircraft-Side Bridge Module |
| (4200) | CTROS | Cargo Travelator-Operated Subway |
| (4210) | CTS-T | Terminal-Side Subway Portal |
| (4220) | CTS-A1 | Forward Aircraft Portal |
| (4221) | CTS-A2 | Aft Aircraft Portal |
| (4230) | ETRA | Elevating Transfer and Alignment Module |
| (4300) | GEP | GARD Exchange Point |
| (4310) | GADOT | GARD Dolly Train |
| (4320) | CPL | Container / Pallet Loader |
| (5000) | Cargo Hold | Aircraft Cargo Hold |
| (5100) | Sill | Aircraft Sill / Cargo Door Interface |
| (5200) | LOOP | Logistics Obround Orchestrated Platform |
| (5210) | DPLG | Dense Pop-Up Lock Grid |
| (5220) | RODA | Roller Drive Assembly |
| (5230) | SURM | Simultaneous Unidirectional Rearward Module |
| (5240) | PLC | Programmable Logic Controller |
| (5300) | SDTU | Smart Door Transfer Unit |
| (6100) | MOSUB | Mobile Storage Unit Buffer |
| (6110) | MOSUB-D | Departure Mobile Storage Unit Buffer |
| (6120) | MOSUB-A | Arrival Mobile Storage Unit Buffer |
| (6130) | MOSUB-T | Transit / Connecting-Flight Buffer |
| (7000) | BACAP | Baggage Claim for Authenticated-Passenger Subsystem |
| (7100) | BIOBAG | Biometric Baggage-Claim Gate |
| (7110) | Passenger Token | Passenger Token or Digital Identifier |
| (7121) | Trolley | Automated Trolley |
| (7130) | Entry Door | BIOBAG Entry Door |
| (7140) | Trolley Hold | Trolley Hold / Storage Stack |
| (7150) | Exit Door | BIOBAG Exit Door |
| (7160) | Exit Corridor-Door | BACAP Exit Corridor-Door (Last-Mile Lockout) |
| (7170) | Biometric Sensors | Facial Iris, or Fingerprint Sensors |
| (7175) | Fallback Hatch | Manual Fallback Hatch |
| (8000) | ConSys | Central Control System |

## Claims

1. An end-to-end automated baggage handling system (1000) comprising:
- Ground-Air Rack Devices (GARD (2000)) configured as dual-purpose baggage containers usable both in ground facilities and in aircraft cargo compartments and distinguished from conventional Unit Load Devices (ULDs) by integration of load-restraint devices (2300), environmental shutters (2200), and embedded identification and telemetry modules (2600);
- terminal-aircraft transfer infrastructures (4000) comprising at least one of:
• a Cargo Travelator-Operated Bridge (CTROB (4100)) formed as a telescopic enclosed bridge with powered conveyor decks, or
• a Cargo Travelator-Operated Subway (CTROS (4200)) formed as a subsurface tunnel conveyor, each configured to convey GARD (2000) continuously between a terminal interface and an aircraft sill (5100) without manual handling, and optionally including a GARD Exchange Point (GEP (4300)) and a Container / Pallet Loader (CPL (4320)) as backup transfer paths;
- an aircraft cargo-hold platform (5000) comprising a Logistics Obround Orchestrated Platform (LOOP (5200)) arranged to index and secure GARD (2000) units along an obround path and to enable selective retrieval of a targeted GARD (2000) without unloading other units, wherein LOOP (5200) cooperates with a Simultaneous Unidirectional Rearward Module (SURM (5230)) for lane-clearance generation and with a Smart Door Transfer Unit (SDTU (5300)) for powered sill-level transfer;
- a baggage-claim subsystem (BACAP (7000)) comprising biometric baggage-claim gates (BIOBAG (7100)) equipped with an interlock chamber, biometric sensors (7170), and an automated trolley subsystem (7140 / 7121), the gates being configured to release baggage (1100, 1200) only after dual validation of a passenger token (7110) and biometric input (7170), so that baggage (1100, 1200) is staged to wait for the authenticated passenger;
- a Portable Item Locator and Orientation Tag (PILOT (1110)) affixed to each baggage (1100, 1200) item and configured to provide unique identification, orientation reference, and tamper detection throughout handling; and
- a Central Control System (ConSys (8000)) configured to orchestrate all subsystems, maintain continuous linkage between baggage (1100, 1200) and passengers via PILOT (1110) and token (7110), enforce sequencing, safety interlocks, fallback modes, and log all operational events for traceability and predictive maintenance, whereby baggage (1100, 1200) is transferred unmanned from departure check-in through aircraft loading to authenticated reclaim at arrival.

2. The system of claim 1, wherein predictive-maintenance telemetry within each GARD (2000) continuously monitors actuation cycles, weight distribution, and environmental history, enabling ConSys (8000) to forecast service intervals and reduce unscheduled ground downtime by pre-emptive maintenance alerts.

3. The system of claim 1, wherein LOOP (5200) integrates a Dense Pop-Up Lock Grid (DPLG (5210)) and Roller Drive Assembly (RODA (5220)) that isolate and unlock only a selected GARD (2000), permitting partial unloading and reducing apron handling time and power consumption.

4. The system of claim 1, wherein each GARD (2000) is energized only when mechanically docked through contactless or conductive pads integrated in AMR/AGV (3200), MOSUB (6100), or transfer infrastructures (4000), the energization being automatically isolated during flight to meet CS-25 Subpart D (CS 25.855 Cargo or baggage compartments) and eliminate live circuitry in-flight.

5. The system of claim 1, wherein the terminal-aircraft transfer infrastructures (4000) maintain a sealed, temperature-controlled corridor for GARD (2000) movement, the Cargo Travelator-Operated Bridge (CTROB (4100)) and Cargo Travelator-Operated Subway (CTROS (4200)) being synchronized with aircraft sill (5100) motion to prevent weather exposure, thermal shock, and ramp delays.

6. The system of claim 1, wherein motive transport between MOSUB (6100) and the transfer infrastructures (4000) is executed by an Autonomous Mobile Robot / Automated Guided Vehicle (AMR/AGV (3200)) or Robo-Shuttle (3100) fitted with self-alignment sensors, anti-collision LIDAR, and locking interlocks that engage only after ConSys (8000) verifies docking geometry, thereby ensuring safe, unmanned apron operations.

7. The system of claim 1, wherein the aircraft cargo-hold platform (5000) further includes a Simultaneous Unidirectional Rearward Module (SURM (5230)) that momentarily reverses a selected roller lane and releases adjacent locks to form a transient clearance path, enabling retrieval of a single GARD (2000) without disturbing neighboring units and cutting turnaround time.

8. The system of claim 1, wherein ConSys (8000) enforces fallback modes including at least one of: (a) quarantine of a non-conforming GARD (2000); (b) rerouting through an alternate transfer infrastructure (4000); or (c) manual override of shutters (2200), retention devices (2300), or trolley (7121) actuation, guaranteeing continued operation under degraded or emergency conditions.

9. The system of claim 1, wherein non-standard baggage (1200) is housed in dimension-adaptive GARD (2000) units that preserve standardized external coupling geometry, allowing heterogeneous loads to pass through the same automated logistics chain.

10. The system of claim 1, wherein passenger tokens (7110) comprise RFID, NFC, biometric, or mobile-device identifiers dynamically linked to ConSys (8000) to ensure authenticated, traceable baggage release and prevent mismatched or fraudulent retrieval.

11. A method of automated baggage handling implemented by the system of claim 1, comprising the operational stages of departure, apron transfer, and arrival, and including:
- loading baggage (1100, 1200) equipped with PILOT (1110) into GARD (2000);
- conveying loaded GARD (2000) from MOSUB (6100) to aircraft sill (5100) via a transfer infrastructure (4000) selected from CTROB (4100), CTROS (4200), or GADOT/CPL (4310/4320);
- indexing and securing GARD (2000) in the cargo hold (5000) through LOOP (5200) with DPLG (5210) and RODA (5220), retrieving targeted units via SURM (5230) and SDTU (5300);
- unloading baggage (1100, 1200) at BACAP (7000) gates (7100) after dual validation of token (7110) and biometric (7170); and
- supervising all stages through ConSys (8000) for sequencing, safety, and predictive-maintenance logging.

12. The method of claim 11, wherein arrival sequencing in BACAP (7000) positions baggage (1100, 1200) in advance of passenger arrival to invert conventional reclaim timing and reduce terminal dwell time.

13. A supervisory control system (ConSys 8000) for an automated baggage-handling system (1000), configured to: maintain real-time records linking baggage (1100, 1200) and PILOT (1110) tags to passenger tokens (7110) and hosting GARD (2000); authorize transfer across infrastructures (4000), cargo-hold platform (5000), and BACAP (7000); enforce sequencing, safety interlocks, and fallback modes; and log operational states for predictive maintenance and performance analytics.

14. The system or method of any preceding claim, wherein ConSys (8000) coordinates AMR (3200), Shuttle (3100), LOOP (5200), and BACAP (7000) through a unified communication protocol ensuring synchronized operation across departure, apron, and arrival stages.

15. The system of claim 1, wherein ConSys (8000) commands a staged de-energization sequence for each GARD (2000) upon aircraft transition to flight mode, the sequence comprising handshake verification with MOSUB (6100) and status confirmation from inductive pads before isolation, thereby preventing residual charge and ensuring synchronized compliance with CS 25.855 safety requirements.
